# EUROPEAN PATENT SPECIFICATION

(11) **EP 1 290 885 B1**
(45) Date of publication and mention of the grant of the patent: **10.07.2013**
(21) Application number: 01936756.4
(22) Date of filing: 22.05.2001
(51) Int. Cl.: H04N 7/16

(54) **SECURE DIGITAL CONTENT DELIVERY SYSTEM AND METHOD OVER A BROADCAST NETWORK**
SICHERES DIGITALINHALTÜBERMITTLUNGSSYSTEM UND VERFAHREN ÜBER EIN RUNDFUNKNETZWERK
SYSTEME ET PROCEDE DE FOURNITURE DE CONTENU PROTEGE SUR UN RESEAU DE DIFFUSION

(30) Priority: 22.05.2000 US 206140 P
(43) Date of publication of application: 12.03.2003
(73) Proprietor: NDS Limited, Staines, Middlesex TW18 4EX (GB)
(72) Inventor: REVITAL, Dan, Jerusalem 96428 (IL); EPSTEIN, Steve, Hashmonaim 73127 (IL); TSURIA, Yossi, Jerusalem 93390 (IL); ZUCKER, Arnold, Hashmonaim 73127 (IL); SIMKIN, Steven, Jerusalem 97234 (IL)
(74) Representative: White, Duncan Rohan
(86) International application number: PCT/IL2001/000469
(87) International publication number: WO 2001/091465

(56) References cited:
- EP-A- 0 876 029
- WO-A-99/09743
- "FUNCTIONAL MODEL OF A CONDITIONAL ACCESS SYSTEM" , EBU REVIEW- TECHNICAL, EUROPEAN BROADCASTING UNION. BRUSSELS, BE, NR. 266, PAGE(S) 64-77 XP000559450 ISSN: 0251-0936 the whole document
- GUILLEMOT C ET AL: "INTEGRATING MPEG-4 INTO THE INTERNET" PROCEEDINGS OF THE EUROPEAN CONFERENCE ON MULTIMEDIA APPLICATIONS,SERVICES AND TECHNIQUES, XX, XX, 1999, pages 181-196, XP000934231
- HANDLEY V JACOBSON ISI/LBNL M: "SDP: Session Description Protocol; rfc2327.txt", IETF STANDARD, INTERNET ENGINEERING TASK FORCE, IETF, CH, 1 April 1998 (1998-04-01), XP015008111, ISSN: 0000-0003

## Description

### FIELD OF THE INVENTION

The present invention relates to a system and a method for digital content delivery, and in particular, to such a system and method in which the digital content is broadcast and/or multicast securely through a broadcast network, such as a packet-based network and/or IP network.

### BACKGROUND OF THE INVENTION

Digital media content can easily and efficiently be delivered through any type of suitable network, although typically such digital content has been delivered through cable and/or satellite networks as broadcast digital content. However, in order for digital content to be fully effectively delivered to users, the basis for secure delivery needs to be provided. In particular, if payment is required, the digital content should be secure against theft, such that only authorized users can retrieve and display the digital content. At the same time, the content also should be delivered in an efficient manner, for example by enabling the secure delivery to be performed efficiently, without hindering or otherwise reducing the performance of the delivery mechanism itself, such as broadcast and/or multicast, for example.

One attempt to provide such effective mechanisms is described in US Patent Nos. 5,282,249 and 5,481,609, both to Cohen et al. The disclosed system enables a signal containing media content to be broadcast widely, yet only to be played back or otherwise displayed by authorized users. This signal could contain a television program for example. The signal is scrambled, such that the authorized users are able to unscramble the signal and play back or otherwise display the media content only with the proper security device, such as a smart card for example. Thus, widely received media content is still protected from access by unauthorized users.

Scrambled television data streams described in the Cohen et al patents comprise both scrambled data representing television signals and coded control messages, also known as ECMs (Entitlement Control Messages). The ECMs of Cohen et al comprise, in a coded form, data necessary for generating a control word (CW) which may be used to descramble the scrambled data representing television signals. An ECM is also termed a control word packet or CWP.

Data necessary for generating a control word is known in the background art to take many different forms and may include, in general, at least any of the following: a control word; an encrypted control word packet which is intended to be decrypted before use; and a seed to a generating function such as, for example, a one-way function which generates the control word upon input of the seed. Throughout the present specification and claims the terms "control word generating information" and "CW generating information" are used interchangeably to designate data necessary for generating a control word in any appropriate form, as described above.

Another attempted solution is described in published European Patent Application No. EP 0858184 and in corresponding US Patent 6,178,242. The disclosed system enables the digital content to be sent in a digitally scrambled format, such that the digital content cannot be read and/or displayed without a key. The key is obtained from a control message, which is only sent to authorized users. Preferably, the key is obtained from coded information contained within the Entitlement Control Message, or ECM, for generating a control word associated with the ECM. Thus, only authorized users are able to correctly read and/or display the digital content.

In addition, the system and method described in European Patent Application No. EP 0858184 enable the authorized user to record and playback or otherwise display the digital content, while preventing the user from producing and distributing multiple playable copies of the digital content to other, non-authorized users. Therefore, the authorized user is able to fully use and enjoy the digital content, while the content itself is still protected from unauthorized use.

As described in European Patent Application No. EP 0858184, and as shown in background art Figure 1 taken from this Application, such a system includes a media device **100,** such as a television set, for playing the digital content, such as a television program for example. Media device **100** is connected to an integrated receiver-decoder (IRD) **110**, for receiving and decoding the digitally scrambled digital content. The system also features a removable security element 120, such as a smart card for example, for providing control words for unscrambling, or otherwise rendering into a clear format, the digitally scrambled digital content by IRD **110**. In addition, the system features a digital VCR **130** for communicating with media device **100** and IRD **110**. Digital VCR **130** is able to record the digital content for later playback and/or display by media device **100**.

IRD **110** receives digitally scrambled digital content which features a plurality ofECMs, each of which is associated with, and is typically followed by, a digitally scrambled digital data segment, containing the actual digital content. Each ECM includes coded information which can be used to generate a control word for unscrambling the associated digitally scrambled digital data segment. Typically, removable security element **120** generates the control word. IRD **110** is then able to unscramble the digitally scrambled digital content, for example for being played by media device **100**.

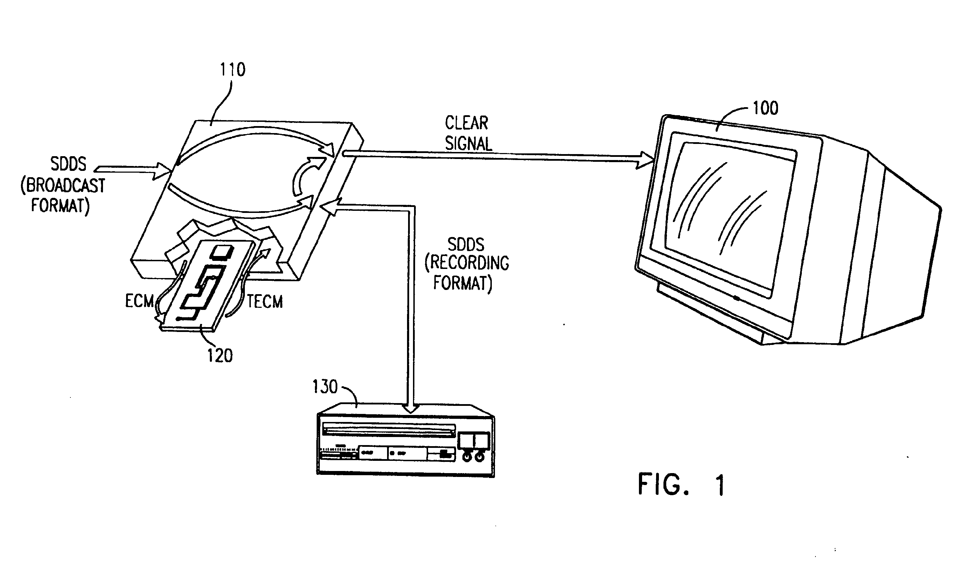

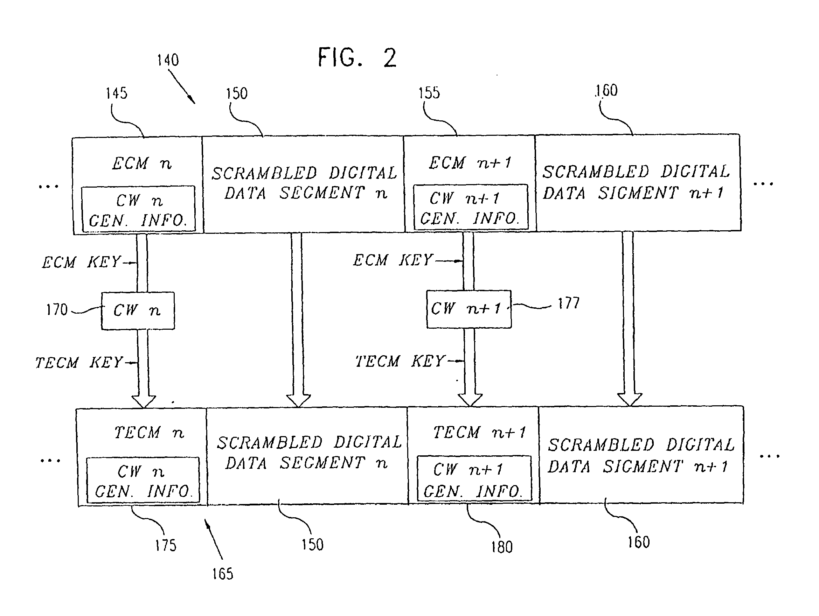

Background art Figure 2, also taken from European Patent Application No. EP 0858184, is a flow diagram illustrating the production of the digitally scrambled digital content. As shown, the digitally scrambled digital content is produced as an SDDS (digitally scrambled digital data stream) **140**, featuring a plurality of ECMs such as an nth ECM **145**, and a plurality of associated SDSEGs such as an nth SDSEG (digitally scrambled digital data segment) **150** which is associated with nth ECM **145**. IRD **110** of Figure 1, in cooperation with removable security element **120**, is able to use SDDS **140** in order to form a recording SDDS **165**. Recording SDDS **165** is produced with the addition of a TECM (transformed ECM) key, which is permanently associated with the system of Figure 1, even if removable security element **120** is changed, replaced or exchanged, for example. This TECM key is used to make a plurality of TECMs, shown as nth TECM **175,** from the control words of the ECMs. Thus, a system which did not feature the correct TECM key could not unscramble the recording SDDS **165** for playing back or otherwise displaying the digital content, while the authorized user is always able to play back or otherwise display the recorded digital content as long as the TECM key is available.

All of these background art references describe mechanisms for the secure delivery of content which are quite useful for such networks as cable and/or satellite networks. However, these references are less useful for packet-based networks, such as the Internet for example, as well as for other types of IP networks. Packet-based networks are typically not dedicated networks for the delivery of particular types of digital media content. Certainly, many different types of content are delivered through the Internet. Furthermore, the Internet is an inherently open, insecure conduit for digital content, as it is widely accessible. The general accessibility of the Internet is also quite useful, since digital media content could be delivered to many different users, internationally, easily and at relatively low cost. Unfortunately, the above-referenced background art references do not teach or suggest a mechanism for secure delivery of digital media content through a packet-based network, particularly for selected, targeted digital media content.

Furthermore, encryption for media content which is transmitted according to such formats and standards as MPEG (Motion Picture Expert Group) is handled at the PID level, such that only 13 bits of information are provided, and such that decryption and re-encryption of the data would be required when transmitted across networks. Such a small amount of information is not sufficient for both encrypting the digital media content and for identifying those devices which are permitted to decrypt and access the content. The further requirement for encryption/decryption when crossing networks is also a disadvantage, since encryption of data which is transmitted according to IP protocols provides an "end-to-end" solution, such that the encrypted data is transmitted in its encrypted format to the end device or client. By contrast, PID is a data link protocol only, and as such, any encrypted data which is transmitted must be decrypted and re-encrypted at each segment of the transmission path, such that the encrypted data cannot be transmitted directly to the end device or client in its encrypted format.

Currently, security for the transmission of content over packet-based networks is handled through one-to-one key exchange mechanisms, in which a central server sends a key individually to each end user computer. Clearly, sending such a key separately to each such computer is inefficient, as it requires extensive bandwidth. Furthermore, the management of such keys is also difficult, although a number of attempted solutions have been proposed.

For example, IPSEC (Internet security framework) was initially developed as a framework for unicast protocols, which was also intended for use for multicast transmission as an additional feature (but which was not specifically designed for multicast transmissions). However, some of the elements that can be useful in a unicast environment become problematic when extended to multicast situations. A case in point is key based security systems and their required infrastructure.

There are two main areas for classic key management in a multicast environment: initializing a multicast group with a common key and rekeying (or updating) the multicast group. For example, public key systems require a mechanism for obtaining the public keys necessary. A server and request model per session is notably insecure, e.g. imposter, man-in-the-middle, etc. If a client-server model is to be used, then third party authentication and certification is also necessary, for example according to the X.509 standard. This standard allows for certification hierarchy, and traversal of trusted paths; however, it is a slow and traffic heavy distribution method.

Cryptographic techniques have been proposed in order to increase the security of key distribution, by encrypting the keys before they are sent. Unfortunately, a basic problem with using cryptographic techniques for key distribution is that each user must be authenticated to receive a key.

In general, standard group key management schemes establish and manage a common key for all members of a group. These management schemes are used for encryption standards and group authentication. A particular problem in this area is related to key revocation methods, as these models tend to work with largely static key possession, since updating with the distribution methods available tends to be bandwidth expensive and time consuming. Examples of key management protocols are described with regard to United Kingdom Patent No. GB 2353682 and US Patent Application No. 09/502,867.

One example of a significant Group Key Management proposal is the GKMP protocol, which uses symmetric keys for all members of the group. This mechanism features a dedicated Group Controller (GC) whose responsibility is managing the group keys. The GC generates group keys in a joint operation with a selected group member. It then communicates with each member separately, validating permissions and sending it a group key, which is encrypted using a shared key (between that member and the GC). This method has very obvious and severe scaling difficulties.

The Scalable Multicast Key Distribution protocol uses Core-Based Tree routing protocol and provides a secure join to a group tree in a scalable method. In such a tree, the routers know the identities of their tree neighbors, and starting from the core which serves as a GC (for generating group session keys and key distribution keys) and working outwards, each router is delegated the ability to authenticate joining members and provide them with the group key. This method is scalable, however it is tied to a specific routing protocol, and combines routing with security, such that each router must be fully trusted since it has the same keys as the GC.

In MKMP (Multicast Key Management Protocol), the initial Group Key Manager (GKM) delegates key distribution authority dynamically. The GKM generates a group key and then sends a multicast message soliciting members to whom it can delegate the distribution authority for the rest of the group members. A message containing keys and access lists is sent to and decrypted by those solicited members, who will then operate as GKMs in their own right. This method allows for a dynamic adaptable on-line group topology. Since MKMP uses a single key for the total group it avoids multiple (hop-by-hop) decryption/re-encryption of payload.

lolus deals with scalability issues by using a "secure distribution tree", wherein the multicast group is divided into a hierarchical set of subgroups. There is a Group Security Controller (GSC) at the top level and Group Security Intermediaries (GSIs) for managing the subgroups. Each subgroup has its own sub-key, chosen by the GSI. The GSI knows the keys to the subgroup and the next higher group and translates messages between the levels. This models suffers from built in latency, during decryption and re-encryption and has difficulties dealing with untrusted GSIs.

In general, GKMP systems which rely on a single group controller still have difficulty scaling to large systems and are burdened by the 'single point of failure' attribute. Single point of failure in this instance also reflects in the security realm. Where, in some of the models above, more than one GC is used, the compromise of one such GC usually means a compromise of the other GCs as well. Furthermore, all of these protocols suffer from drawbacks in the area of compromise recovery and/or revocations of membership.

Various methods have been discussed in the literature in order to improve group key management systems, for example by using groups of members as controllers and cluster architectures. Hardjono, et al ("Secure IP Multicast: Problem areas, Framework, and Building Blocks ", Internet Research Task Force, draft-irtf-smug-framework-01.txt September 2000; for other references, see the list at the end of this section) suggest a further extension of the Iolus tree distribution model, and other extensions/proposed solutions have also been suggested.

In 'Key management for Multicast: Issues and Architecture' (see full reference below), a hierarchical tree approach is proposed in order limit the number of transmissions (key exchanges) and storage (of keys) required. Although more efficient than other variations, the basic key distribution principles are still enforced and are still subject to the same arguments previously cited against standard key distribution models.

The above problems become even more complex with regard to key revocation. In order to prevent new group members from accessing older data or leaving members from accessing new data, a group controller has to change the multicast group key whenever membership in the group changes. Adding a new member either from a central GC or from one of the distributed models is fairly straight forward and efficient, i.e. using a one to one unicast model. However revoking membership rights in the standard group key protocols becomes very problematic, because the leaving member already has the group key.

The approach taken by many key management protocols (GKMPA, SMKD, MKMP) to remove members is to generate a new group key, and to send it independently to each of the remaining group members, usually using secret keys which are shared between each of the members and the GC. In this scenario, a new multicast group is created. But the scaling problems here are significant, as are the timing issues, i.e. how to make the new key available in time to access the new data, and how to manage cases where it does not. In particular, the group is not operational during the recovery process once the old key has been declared to be invalid, such that recovery/revocation processes are inefficient and may even prevent the legitimate members from receiving data and/or other services. Timing issues are less significant for the initial creation of the group, since members may be selected and may receive the key(s) well in advance of the actual operation of the group.

The alternatives discussed above where groups are divided into various sub-groups, be they trees, hierarchical trees, clusters, etc allow for better scaling by simply requiring changes within the affected subgroup. It does become more complex when one of the local controllers for a group becomes untrusted, since replacement keys must be handled within a complex structure, and between different levels of influence.

Various other mechanisms are defined in the literature to overcome these problems, including using sets and subsets of keys distributed amongst the group members, multiple keys distributed in such a fashion that each member cannot compute a new key value on its own, but rather requires active participation of the other members, etc. None of these mechanisms overcome the previously described problems which are inherent to such key distribution mechanisms.

WO 9909743 discloses a cable television system for providing conditional access to services. The cable television system includes a headend from which service "instances", or programs, are broadcast and a plurality of set-top units for receiving the instances and selectively decrypting the instances for display to system subscribers. The service instances are encrypted using public and/or private keys provided by service providers or central authorization agents. Keys used by the settops for selective decryption may also be public or private in nature, and such keys may be reassigned at different times to provide a cable television system in which piracy concerns are minimized.

### References:

1.□ Vicki Johnson and Marjory Johnson - IP Multicast Initiative (IPMI) White Papers - Stardust.com Inc. www.ipmulticast.com
2.□ T. Hardjono, R. Canetti, M Baugher, P. Dinsmore "Secure IP Multicast: Problem areas, Framework, and Building Blocks ", Internet Research Task Force, draft-irtf-smug-framework-01.txt September 2000.
3.□ T. Hardjono, R. Cain, N.Doraswamy "a Framework for Group Key Management for Multicast Security", Internet Engineering Task Force, draft-ietf-ipsec-gkmframework-03.txt August 2000.
4.□ D. Wallner, E. Harder, R. Agee - Key Management for Multicast: Issues and Architectures, National Security Agency June 1999. Network Working Group - Request for Comments: 2627. Copyright The Internet Society 1999.
5.□ Harney, H., Muckenhim, C. and T. Rivers, " Group Key Management Protocol (GKMP) Architecture", RFC 2094 September 1994.
6.□ Harney, H., Muckenhirn, C. and T. Rivers, " Group Key Management Protocol Specification", RFC 2093 September 1994.
7.□ H. Harney, A. Colegrove, E. Harder, U. Meth, R. Fleisher, "Group Secure Association Key Management Protocol", INTERNET-DRAFT, draft-harney-sparta-gsakmp-sec-02.txt, June 2000.
8.□ Ballardie, T. "Scalable Multicast Key Distribution", RFC 1949 May 1996.
9.□ R. Canetti, B. Pinkas "A Taxonomy of Multicast Security Issues" draft-irtf-smug-taxonomy-01.txt August 2000.
10.□ O. Rodeh, K. Birman, D. Dolev " Optimized Group Rekey for Group Communication systems", http://www.cs.huji.ac.il~orodeh/papers/opt/main.html.
11.□ Bellovin, S.M. " Problem Areas for the IP Security Protocols" Proceedings of the Sixth USENIX UNIX Security Symposium San Jose California, July 1996.
12.□ S. Frankel, S. Kelly, R. Glenn, "The AES Cipher Algorithm and Its Use With Ipsec" Ipsec Working Group, draft-ietf-ipsec-ciph-aes-cbc-01.txt Nov. 2000.
13.□ S. Kent, R. Atkinson "IP Encapsulating Security Payload (ESP)", Network Working Group Request for Comments: 2406 November 1998.
14.□ S. Kent, R. Atkinson "Security Architecture for the Internet Protocol", Network Working Group Request for Comments: 2401 November 1998.
15.□ R. Canetti, et al "An Architecture for Secure Internet Multicast", draft-ietf-ipsec-sec-mcast-arch-00.txt. No date given.
16.□ Rogaway, P. "Problems with Proposed IP Cryptography", Comments draft-rogaway-ipsec-comments-00.txt, April 3, 1995.
17.□ Mittra, S. "Iolus: A Framework for Scalable Secure Multicasting" Proceedings of the ACM SIGCOMM 1997.
18.□ Ming, D. "Techniques for multicast key update"Email message received on Smug Mail List, March 31, 2000.
19.0 US5282249: System for controlling access to broadcast transmissions, M. Cohen, J. Hashkes, Jan.25, 1994.
20.□ US5420866: Methods for providing conditional access information to decoders in a packet-based multiplexed communications system, A.J. Wasilewski, Scientific_Atlanta, Inc, May 30,1995.
21.□ US5481609: System for controlling access to broadcast transmissions, M. Cohen, J.
   Hashkes, News Data Security Products Ltd. Jan.2, 1996.
22.□ US6049878: Efficient, secure multicasting with global knowledge, G. Caronni, M.
   Waldvogal, Sun Microsystems April 11, 2000.
22.□ US6195751: Efficient, secure multicasting with minimal knowledge, G. Caronni, M.
   Waldvogal, Sun Microsystems Feb. 27, 2001.
23.□ US6108706: Transmission announcement system and method for announcing upcoming data transmissions over a broadcast network, K.J. Birdwell, et al, Microsoft Corporation, Aug. 22, 2000.
24.□ US6002768: Distributed registration and key distribution system and method, A.
   Albanese, R. Oppliger, International Computer Science Institute, Berkeley, CA., December 14, 1999.
25.□ US5784463: Token distribution, registration, and dynamic configuration of user entitlement for an application level security system and methods, J.F. Chen, J Wang, V-ONE Corporation. July 21, 1998.
26.□ US6061791: Initial secret key establishment including facilities for verification of identity, T. Moreau, Connotech Ecperts-Conseils Inc. May 9, 2000.
27.□ US4868866: Broadcast data distribution system, B.L. Williams Jr., McGrraw-Hill, Sept 19,1989.
28.□ US5761306: Key replacement in a public key cryptosystem, T. Lewis, Visa International Service Association, June 2, 1998.
29.□ US5748736: System and method for secure group communications via multicast or broadcast, S. Mittra, May 5 1998.
30.□ US6026167: Method and apparatus for sending secure datagram multicasts, A. Aziz, Sun Microsystems Inc. Feb. 15, 2000.
31.□ US5029208: Cipher-key distribution system, K. Tanaka, NEC Corporation, July 2, 1991.
32.□ US5778187: Multicasting method and apparatus, A. Monteiro, J.F. Butterworth, Netcast Communications Corp, July 7, 1998.
33.□ A. Kleinmann, " Scenarios and Requirements for Business-Oriented Multicast Security", Secure Multicast Research Group, Meetings, December 7, 1998.

### SUMMARY OF THE INVENTION

None of the disclosed background art solutions provides a security system for the delivery of targeted digital media content through a packet-based network such as the Internet. Furthermore, none of the references teaches or discloses a mechanism for providing such a security system without requiring one-to-one key exchange, while still enabling selection of specific digital media content by particular end users. In addition, none of the references teaches or suggests a mechanism for broadcasting digital media content in a secure manner to a general group of end users, while still maintaining the desired degree of specificity in terms of those end users who actually use or access the digital media content. Also, none of the references teaches or suggests a mechanism for broadcasting and/or multicasting which is itself both efficient and secure, such that the security mechanisms do not detract from the performance of the actual delivery mechanism.

Therefore, there is an unmet need for, and it would be highly useful to have, a system and a method for secure digital content delivery, which enables digital media content to be delivered through a packet-based network such as the Internet, without requiring any inherent security in the provisions of the network itself, and without requiring one-to-one key exchange.

The present invention, in preferred embodiments thereof, fulfills these needs by providing a system and a method for secure distribution of digital media content through a broadcast network, which may be a packet-based network such as the Internet and/or any type of IP network (even for those IP networks which are not packet-based networks). However, for the purposes of discussion only, the following description centers around packet-based networks, and more specifically IP networks which are packet-based networks, such as the Internet for example. In addition, the present invention is particularly concerned with broadcast and/or multicast transmissions through such networks.

The security of the present invention does not require one-to-one key exchange, but rather enables keys, and/or information required in order to build the key, to be broadcast through the network. The digital media content is then also preferably broadcast, but cannot be accessed without the proper key. However, preferably only authorized end-user devices are able to access the digital media content, by receiving and/or being able to access the proper key. Thus, the present invention is useful for other types of networks in which digital media content is more easily broadcast rather than unicast, in addition to packet-based networks.

The present invention, in preferred embodiments thereof, supports the distribution of content to end user devices from one or more central distribution points, as in client-server models and variations thereof, and/or peer-to-peer distribution, for example between end user devices. In addition, the present invention, in preferred embodiments thereof, also supports distribution models within either of these mechanisms for unitary distribution, to a specified end user device, or broadcast/multicast distribution, to a plurality of end user devices. In any case, in order for the distributed content to be operative, for example to be "played back" or otherwise displayed, the recipient end user device is optionally and more preferably in communication with a broadcaster at least once before such a display is permitted. The broadcaster then enables the recipient end user device to play back or otherwise display the received content, for example by sending a code to the recipient end user device. Optionally, the broadcaster may require payment to be received before enabling the content for the recipient end user device. Thus, the present invention supports flexible distribution of content according to a number of different distribution models, while still preventing unauthorized play back or other display.

According to preferred embodiments of the present invention, there is provided a combination of secure hardware and software to prevent and/or at least retard unauthorized access or "hacking". In order for access to the distributed content to be controlled, the content itself must be protected, for example by encryption or scrambling. Hereinafter, the term "scrambling" is considered to encompass both encryption, which involves the mathematically determined alteration of content or even only a part thereof to a form which cannot be read without the proper key, and a simpler form of scrambling, which involves the rearrangement of portions of the content, such that the content is only readable when properly rearranged. Indeed, even the simpler forms of scrambling can be effectively performed by altering, or otherwise rendering inaccessible, a small percentage of the overall content, after which the entire unit of content can no longer be displayed. By protecting the content itself, the present invention enables the content to be completely portable, and to be distributed freely, while still ensuring that control of access to the content is maintained by a central authority as required.

The preferred combination of hardware and software components enables the present invention to most effectively protect access to the content, while still enabling the user to easily and transparently play back, or otherwise display, the content. More preferably, the end user device which is used for the present invention includes a security module, for unscrambling the digitally scrambled content according to a received code. The security module optionally and more preferably features a renewable security submodule, such as a smart card with a smart card reader for example, although of course any suitable combination of software and/or hardware may optionally be used. The security module receives the necessary code from the broadcaster, and is then able to unscramble the received content for play back or other display. Most preferably, the operation of the security module is transparent or substantially transparent to the end user.

According to the present invention, there is provided a method for creating a secure transmission mechanism for a plurality of end user devices in an Internet Protocol packet-based network without requiring one-to-one key exchange, the method comprising: providing a plurality of packets; securing said plurality of packets according to security information to form secured packets, the security information being changed according to a key period, the security information including control word information for key generation at each of the end user devices; multicasting an entitlement control message to the end user devices through the IP packet-based network, the entitlement control message including the control word information, the entitlement control message including first address information; multicasting the secured packets to the end-user devices through the IP packet-based network, the secured packets including second address information; creating an announcement according to an announcement protocol, the announcement including the second address information of the secured packets and the first address information of the entitlement control message; transmitting the announcement to the end user devices thereby enabling matching between the secured packets and the entitlement control message in the end-user devices.

According to another embodiment of the present invention, there is provided a method for producing a conditional access (CA) system for use in a packet-switched environment (packet CA system) from a CA system for use in a broadcast environment (broadcast CA system), the method comprising: providing a broadcast CA system comprising at least one CA security characteristic; providing a packet-switched data transmission system including a security subsystem having a plurality of packet-switched security characteristics; and creating a mapping from the at least one CA security element to at least one of the plurality of packet-switched security elements, thereby producing a packet CA system.

According to yet another embodiment of the present invention, there is provided a packet-switched conditional access (CA) system for use with an end-user playback device, the CA system comprising: a protected data receiver for receiving protected data protected with at least one key; an ECM packet receiver for receiving at least one ECM packet from a packet-switching network; and an ECM-based key generator for generating the at least one key from the at least one ECM packet.

According to still another embodiment of the present invention, there is provided a method for providing an entitlement control message (ECM) based conditional access (CA) system based on a packet-switching network comprising: receiving a plurality of ECMs via the packet-switching network; storing the plurality of received ECMs; and choosing, from among the plurality of stored ECMs, an ECM for providing access to CA-protected data.

According to yet another embodiment of the present invention, there is provided a method for creating a secure transmission mechanism for a plurality of end user devices in a packet-based network, comprising: encrypting a plurality of packets with a key to form encrypted packets, the key having associated key information for determining the key; multi-casting the associated key information to the plurality of end user devices through the packet-based network, thereby obviating the need to send the associated key information to each end user device individually; and multi-casting the encrypted packets to the plurality of end user devices to form the secure transmission mechanism.

According to still another embodiment of the present invention, there is provided a method for creating a secure transmission mechanism for a plurality of end user devices in a packet-based network, comprising: multi-casting a plurality of secured packets and security information to the plurality of end user devices, thereby obviating the need for a one-to-one transmission of the security information to each end user device individually and thereby forming the secure transmission mechanism.

Hereinafter, the terms "file", "portion", "item" or "stream", with regard to digital content, are used interchangeably and refer to any unit of data for such digital content, whether as a functional unit such as a packet for example, or as a conceptual unit such as a television program for example. "Streamed" or "streaming" data may also be considered as being formed from any type of unit of data.

Hereinafter, the term "display" refers to any type of playback or playing out of media content data for a user, or otherwise rendering such data sensible to one or more human senses, including, but not limited to, the audible production of audio data and the visible production of video data, and combinations thereof.

Hereinafter, the term "network" refers to a connection between any two or more computational or other electronic devices which permits the transmission of data.

Hereinafter, the term "computational device" includes any type of digital instrument which is capable of operating a software program.

For the present invention, a software application could be written in substantially any suitable programming language, which could easily be selected by one of ordinary skill in the art. The programming language chosen should be compatible with the computational device according to which the software application is executed. Examples of suitable programming languages include, but are not limited to, C, C++, Java and Assembly.

In addition, the present invention could be implemented as software, firmware or hardware, or as a combination thereof. For any of these implementations, the functional steps performed by the method could be described as a plurality of instructions performed by a data processor.

Hereinafter, "Applied Cryptography" by Bruce Schneier, John Wiley 2nd ed. 1996, is referenced for the teachings regarding cryptography · and techniques for implementation thereof.

### BRIEF DESCRIPTION OF THE DRAWINGS

The invention is herein described, by way of example only, with reference to the accompanying drawings, wherein:
FIG. 1 is a schematic block diagram of a background art system;
FIG. 2 shows a flow diagram illustrating the production of the digitally scrambled digital content according to the background art;
FIG. 3 is a schematic block diagram of a system according to the present invention for secure delivery of digital content through a packet-based network;
FIG. 4 shows an exemplary format of an encrypted media content packet according to the present invention;
FIG. 5 shows an exemplary format for ECM packets according to the present invention;
FIG. 6 shows an exemplary EMM packet according to the present invention;
FIG. 7 shows an exemplary but preferred implementation of the broadcaster headend of Figure 3 in greater detail according to the present invention; and
FIG. 8 shows an exemplary but preferred implementation of the end-user client of Figure 3 in greater detail according to the present invention.

### DESCRIPTION OF THE PREFERRED EMBODIMENTS

The present invention features a system and a method for secure distribution of digital media content through a packet-based network such as the Internet, or another type of IP network, through multicasting and/or broadcasting of data. The security of the present invention does not require one-to-one key exchange, but rather enables keys, and/or information required in order to build the key, to be broadcast through the packet-based network. The digital media content is then also preferably broadcast, but cannot be accessed without the proper key. However, preferably only authorized end-user devices are able to access the digital media content, by receiving and/or being able to access the proper key. Thus, the present invention is useful for other types of networks in which digital media content is more easily broadcast rather than unicast, in addition to packet-based networks and/or various types of IP networks.

The present invention supports the distribution of content to end user devices from one or more central distribution points, as in client-server models and variations thereof, and/or peer-to-peer distribution, for example between end user devices. In addition, the present invention also supports distribution models within either of these mechanisms for unitary distribution, to a specified end user device, or broadcast/multicast distribution, to a plurality of end user devices. However, for the purposes of the present invention, distribution by broadcast and/or multicast is considered to be particularly preferred. In any case, in order for the distributed content to be operative, for example to be "played back" or otherwise displayed, the recipient end user device must have been in communication with a broadcaster at least once before such a display is permitted. The broadcaster then enables the recipient end user device to play back or otherwise display the received content, for example by sending a code to the recipient end user device. Optionally, the broadcaster may require payment to be received before enabling the content for the recipient end user device. Thus, the present invention supports flexible distribution of content according to a number of different distribution models, while still preventing unauthorized play back or other display.

According to a preferred embodiment of the present invention, the digital media content is securely transmitted through an IP network as the packet-based network (although non-packet based IP networks and/or non-IP but packet-based networks are also optionally implemented with the present invention). Optionally, the IP network is the Internet. However, transmission of such digital media content may be different than transmission of other types of data through a network such as the Internet. For example, a typical Internet-based content provider does not have a continuous or at least continuing relationship with the end user, but instead may only supply such content on a "one-off" or one-time basis.

By contrast, a broadcaster of digital media content through an IP network may optionally wish to require a subscription or repeated payments for repeated accesses to the digital media content, although alternatively, the security information may optionally be "hard-wired" into the end user receiving device. Also, payment is more likely to be regular and repeated, rather than a single individual payment. Therefore, broadcasters of content through an IP network need be able to handle many end users in a secure, scalable manner. As previously described, one-to-one key exchanges are clearly not a reasonable, efficient, scalable mechanism for such security.

The environment of IP networks such as the Internet is also based upon a particular group of standards, which define the protocols for communication through such a network, and which are different from the communication protocols and standards for transmission through a dedicated cable network, for example. These protocols must be used for communication through the network. Thus, the present invention is preferably constructed with agreed standards and protocols, of which an example is given below for an IP network, it being understood that the present invention is operative with substantially any type of packet-based network.

Security for IP networks is currently based upon the IPSEC (Internet security framework) for creating the related set of standards, which are intended to provide a security protocol in the network layer as part of the network structure. The IPSEC standards assume but do not require that security is based upon key exchange protocols. These standards do not consider multicast scalability issues, particularly with regard to key exchange and management issues for large numbers of simultaneous users. However, the present invention is preferably compatible with the IPSEC standards, while differing in the actual application of the security protocol itself, for example by associating the media content stream with the matching ECMs (entitlement control messages) according to the IPSEC announcement protocol. More preferably, at least certain IPSEC mechanisms are used for coordinating the delivery of security information such as ECMs to the end user devices, in order to ensure compatibility between the system of the present invention and other systems.

According to preferred embodiments of the present invention, there is provided a combination of secure hardware and software to prevent and/or at least retard unauthorized access or "hacking". In order for access to the distributed content to be controlled, the content itself must be protected, for example by encryption or scrambling. Hereinafter, the term "scrambling" is considered to encompass both encryption, which involves the mathematically determined alteration of content or even only a part thereof to a form which cannot be read without the proper key, and a simpler form of scrambling, which involves the rearrangement of portions of the content, such that the content is only readable when properly rearranged. Indeed, even the simpler forms of scrambling can be effectively performed by altering, or otherwise rendering inaccessible, a small percentage of the overall content, after which the entire unit of content can no longer be displayed. By protecting the content itself, the present invention enables the content to be completely portable, and to be distributed freely, while still ensuring that control of access to the content is maintained by a central authority.

The preferred combination of hardware and software components enables the present invention to most effectively protect access to the content, while still enabling the user to easily and transparently play back, or otherwise display, the content. More preferably, the end user device which is used for the present invention includes a security module, for unscrambling the digitally scrambled content according to a received code. The security module optionally and more preferably features a renewable security submodule, such as a smart card and smart card reader for example, although any combination of hardware and/or software may optionally be used. The security module receives the necessary code from the broadcaster, and is then able to unscramble the received content for play back or other display. Most preferably, the operation of the security module is transparent or substantially transparent to the end user.

The principles and operation of the present invention may be better understood with reference to the drawings and the accompanying description.

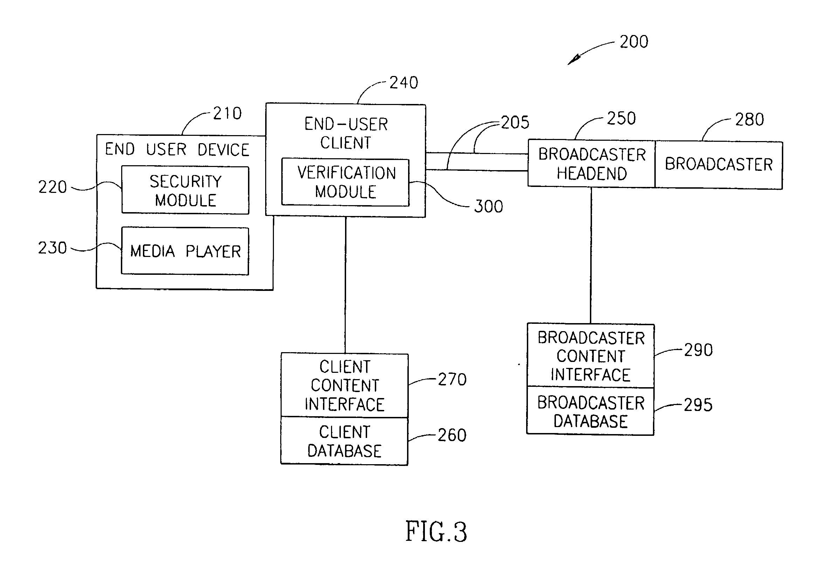

Referring now to the drawings, Figure 3 is a schematic block diagram of an illustrative system according to the present invention for secure delivery of digital media content through a packet-based network as an exemplary but preferred implementation of the present invention, as previously described.

As shown, a system **200** features an end user device **210** with an associated security module **220**. Security module **220** optionally and preferably comprises a smart card, such that end user device **210** (or security module **220**) would also feature a smart card reader, although of course other implementations are possible. For example, security module **220** could optionally be implemented as software alone, or as a combination of hardware and software. For the purposes of description below only and without any intention of being limiting in any way, security module **220** is assumed to include a smart card reader and smart card.

End user device **210** also features a media player **230** for playing back or otherwise displaying at least one type of media content, such as audio content for example. End user device **210** operates an end-user client **240,** which acts as the interface between end user device **210** and a broadcaster headend **250**. End user device **210** and broadcaster headend **250** communicate through at least one channel **205.** Two such channels **205** are shown, although optionally system **200** could feature more channels **205**, or alternatively could feature only one channel **205**. At least one channel **205** is preferably a network, which could be substantially any type of suitable network, including but not limited to, the Internet, a cable network or a satellite distribution mechanism. Optionally but more preferably, as described in greater detail below, such a channel **205** is an IP network, such that communication between end user device **210** and broadcaster headend **250** is in the form of an IP session. However, the term "channel" itself may refer to any type of mechanism for data transmission, regardless of the type of data and/or the transmission medium.

Broadcaster headend **250** in turn communicates with broadcaster **280** in order to provide at least the security information to end user device **210** through end-user client **240.**

More preferably, only security features are provided to end user device **210** through end-user client **240**, and the actual content is transmitted separately. Optionally and more preferably, the actual media content is transmitted from a broadcaster content interface **290** to a client content interface **270**, through a same or different channel **205** as the associated security information, such that the security information is not necessarily transmitted with the secured content. Client content interface **270** then passes the media content to media player **230**, after such media content has been accessed with the necessary security information. Optionally and most preferably, each of client content interface **270** and broadcaster content interface **290** has access to a particular database for storing the security information, shown in Figure 3 as a client database **260** and a broadcaster database **295** respectively. Each of client database **260** and broadcaster database **295** is preferably secured with some type of security mechanism.

The security features for the content are preferably provided by encrypting the content, such that access to the media content is only possible for authorized users, although optionally contact with broadcaster **280** and/or broadcaster headend **250** is not required. However, rather than using one-to-one key exchange, which would be very inefficient as it would require specific transmission of the key to each end user device **210**, preferably access information is broadcast or multicast to a plurality of end user devices **210**. This information could be sent in the form of a particular message through channel **205**, in which case the information would be a permission message. The presence or absence of information which is locally accessible by each end user device **210** then determines whether the broadcast or multicast access information is actually usable by a particular end user device **210**, more preferably in order to create a key which is then used to access the media content by security module **220**. Optionally, if a plurality of different broadcasters **280** are present, separate storage space for credit information and/or other broadcast information is preferably provided on said security module **220** for each broadcaster **280**.

According to a particularly preferred embodiment of the present invention, the access information is preferably distributed through an ECM (control message), which more preferably enables end user device **210** to create the correct key and as such may be considered to be an example of a permission message. For example, the ECM could comprise a seed which is input into a function performed by security module **220**, the result of which is the key required to access the media content, by decrypting the media content or otherwise rendering the media content into a displayable format.

Optionally, the ECM is broadcast to all end user devices **210**, but the particular end user device **210** is more preferably only able to generate the key if this end user device **210** also receives an EMM, or entitlement message, from broadcaster headend **250**. The EMM is optionally and more preferably used for periodic renewal of security module **220**, such that without periodic receipt of such an EMM, security module **220** eventually is no longer able to access the media content, since security module **220** is no longer able to use the ECM information to generate the key for decrypting or otherwise accessing the media content. More preferably, each EMM contains one or more content service identifiers, which may be an alphanumeric string for example. Although the term "service identifier" is used herein, it should be noted that in face such identifiers may optionally refer to any type of authorization, and not only authorizations for services. At least one such identifier is also present in the ECM, such that security module **220** is more preferably only able to access those ECMs for which a matching service identifier has been delivered in a EMM. It should be noted that there is not necessarily a one-to-one relationship between each EMM and/or each service identifier and each ECM, since service identifiers may optionally be used for granting permission to access more than one ECM, and since each ECM may optionally contain more than one such service identifier. Most preferably, each service identifier expires after the multi-cast session has finished, in order to prevent security module **220** from being able to grant access to "old" previously transmitted data, although optionally the service identifier could then be renewed and used again for a different such session.

According to an optional but preferred embodiment of the present invention, for "pay per view", an EMM is not necessarily required, although it may optionally be required in order to set those conditions under which the purchase may be made, such as possession of a particular number of credits by security module **220** for example. Instead, security module **220** would preferably receive a ECM which allows a "free preview", and/or which contains the necessary information for purchasing the content. Such an ECM could optionally and more preferably be labeled with a "general" or generic service identifier, such that the ECM would be accepted by any security module **220** and/or by security modules **220** of a particular type of end user device **210**. The user could then more preferably instruct end user device **210** to purchase the content, for example through security module **220**. Optionally and most preferably, credits or other units of exchange for content are kept on security module **220**, particularly if security module **220** is implemented with a smart card, in order for the account of the end user to be immediately or later debited for the purchased content. Also optionally, an EMM could be used to deliver credits, tokens or the like, to enable end user device **210** to be used to purchase the "pay per view" content.

According to the optional but preferred embodiment of the present invention, the content of the EMM is stored securely in the smart card or other secure portion of security module **220**. Thus, the key, or information required to generate the key, may optionally be broadcast, while the ability to use such a key is preferably still controlled by broadcaster **280**, through the distribution of some type of permission message for example.

The EMM itself could also optionally be sent to a plurality of different end user devices **210** at one time, as a broadcast or multicast, such that a group of end user devices **210** would receive the information at once. For example, a particular EMM could be designated for one group of end user devices **210**, according to a particular subscription plan or other type of payment structure, and/or according to the network address of the members of the group of end user devices **210**. Alternatively or additionally, a particular ECM may preferably be blocked for a particular group of end user devices **210** for a "blackout". Such a blackout may optionally be implemented for such a group according to geographical location, for example in order to obey laws in a particular country, and/or according to characteristics of individual end users within the group, for example according to subscription and/or parental rating information. Preferably, the blackout is determined through a blackout identifier which is contained in the ECM, for identifying an end user device blocked from accessing the content of a particular ECM, such that access may also include the ability to use a control word and/or information for generating such a control word which is provided through the ECM.

Other types of differential access may also optionally be implemented within the present invention such that differential access is preferably defined for different levels of users. For example, such differential access can optionally be determined within the ECM based on service identifiers, where multiple service identifiers apply to one transmission and are contained in a single ECM, such that a blackout would preferably be applied to the services which are not allowed.

For a packet-based network, and particularly for an IP network such as the Internet, the EMM and ECM information is preferably sent through channel **205** according to a particular packet format. End-user client **240** would receive a packet for ECM information which would optionally and preferably contain a header for specifying those service identifiers to which the packet information would apply, thereby also specifying which security modules **220** are able to access the ECM information, since preferably only those security modules **220** with the corresponding service identifier would be permitted to access the ECM information. Security module **220** would then compare the specified service identifier(s) to the service identifier information stored by security module **220**, and/or within an associated component, such as a smart card for example. If the packet is relevant to such a stored service identifier, then security module **220** would read the ECM information contained within the packet, in order to be able to access particular media content. Such a mechanism would enable ECM information to be generally transmitted to a plurality of end user devices **210**, but only to be used by those end user devices **210** for which it is relevant.

More preferably, broadcaster **280** controls the connection between each ECM and the media content to which the ECM provides access. If the use of EMM information/ service identifiers is implemented as preferred, broadcaster **280** also preferably controls the connection between each service identifier and the ECM information to which the service identifier grants access. Such control enables broadcaster **280** to determine which end user device **210** receives access to which media content, for example according to payment by the end user, subscription basis and/or other factors, without requiring broadcaster **280** to specifically transmit a key to each end user device **210** on a one-to-one basis. Furthermore, since most preferably both ECM information and service identifiers are renewed periodically, and indeed most preferably must be renewed periodically, the ability to broadcast or multicast ECM information and/or service identifiers to end user devices **210** is even more important, since otherwise significant amount of bandwidth for channel **205** and computational resources would need to be devoted simply to renewing the access information.

Optionally, broadcaster headend **250** repeatedly transmits the ECM while the media content is being received and displayed by end user device **210**, in order to require security module **220** to repeatedly derive the key for decrypting or otherwise accessing the media content. This requirement provides additional security, such that if the key or other security information is somehow obtained by an unauthorized user, changing the security information would prevent the unauthorized user from accessing all of the media content. Additionally or alternatively, repeatedly transmitting the ECM has the advantage of enabling an authorized security module **220** to rapidly access the multi-cast content, even if access is initiated in the middle of a multi-cast session. Each period for which the security information is transmitted and/or valid may be termed a "key period", optionally for validating the ECM. The length of the key period may optionally be determined according to a length of time, for example, and/or could be determined by the duration of a particular multi-cast session. Other optional but preferred features of the key period include, but are not limited to, transmitting the security information, such as the ECM, in advance of the media content; short duration for the key period itself and/or rapid key change (on the order of seconds between changes); and buffering previously received ECM information and/or previously derived keys, if such information is not changed but only renewed. Both optional features prevent access to the media content from being disrupted because the transmission of the ECM is delayed, which is particularly important for IP networks and other types of networks for which transmission of the packet is not guaranteed. A corresponding preferred feature of EMMs is an authorization period, such that EMMs are preferably only valid for the authorization period, after which a new EMM must be received. Thus, the security information is still renewed, while also supporting access of authorized end users to the media content, even in a non-reliable network environment such as the Internet.

According to a preferred embodiment of the present invention, end user device **210** operates a verification module **300** for verifying both the received security information from broadcaster headend **250** and the authenticity of the information contained within security module **220**.

Verification module **300** preferably filters all communication external to end user device **210**, whether from broadcaster headend **250** or from another communication source, in order to determine whether such communication should be passed to security module **220**. For example, verification module **300** could optionally have access to identifiers for identifying particular information which is contained in EMMs, in order to determine whether security module **220** has access to such EMMs. Such identifiers may optionally include, but are not limited to, identifiers for determining access according to at least one characteristic selected from the group consisting of a characteristic of end user device **210** and a characteristic of information stored on end user device **210.**

Verification module **300** would then optionally be able to determine whether a received packet is relevant to that security module **220**, according to the EMM information as previously described. Furthermore, verification module **300** could also optionally and preferably have access to the service identifiers which are stored in security module **220**, in order to determine whether a particular ECM should be passed to security module **220** for further processing. In addition, more preferably verification module **300** also determines the authenticity of EMMs and/or ECMs, for example by determining whether such messages are digitally signed for verification.

According to other optional but preferred embodiments of the present invention, particularly in implementations containing a plurality of broadcaster headends **250**, broadcaster headends **250** are distinguished with different levels of authorization and/or abilities. For example, some broadcaster headends **250** may only be allowed to transmit content based upon the type of service identifier.

In order to ensure compatibility between system **200** and other mechanisms for IP network security, preferably system **200** is in compliance with the IPSEC (Internet security framework) framework for determining standards, even if the features provided in these standards are not always completely used. As previously described, security for IP networks is currently based upon the IPSEC set of standards, which are intended to provide a security protocol in the network layer as part of the network structure. Optionally and more preferably, one of the announcement protocols of the IPSEC standards is used in order to associate encrypted or otherwise protected media content with the security information which is required for access, such as the particular ECM or ECMs for example. For any type of announcement protocol which is used, optionally and more preferably, the packets associated with such a protocol are encrypted, most preferably with a key which is not session-based but which is available and accessible over a longer duration (for example, during a particular subscription period). One non-limiting example of a standard for providing such encryption is the SAP (session announcement protocol) protocol of IETF. Alternatively, the announcements may also be delivered as plaintext, without encryption. However, for certain types of announcements, access to the information would preferably and preferably be restricted, for example only to those end user devices and/or security modules associated with a subscription. Alternatively or additionally, certain announcements could optionally and preferably be more freely available, for example in order to deliver general information such as a "free preview mode" for previewing content which could then optionally be purchased, which would optionally and more preferably be available to any end user device having an associated smart card (or other general characteristic).

One non-limiting example of a suitable IPSEC announcement protocol is the SDP (session description protocol), as described in RFC 2327. Of course, other types of announcement protocols could also optionally be used, such as CDF (Channel Definition Format) and new XML-based proposals for example. The protocol is intended to be able to describe multimedia sessions, in which a "session" is a set of multimedia sending and receiving devices, and the streams of multimedia data which flow from sending devices to receiving devices. The description of such sessions is intended to permit those participants in the session to receive information about initiating participation, and also about the session itself. With regard to the present invention, SDP is optionally and preferably used for conveying information about the protected media content which is transmitted from broadcaster headend **250** to end user device **210**, and to coordinate between each ECM and the associated protected media content.

SDP is a text-based protocol, formatted by lines, in which each line has the format *type =<value>*. This information would be contained within a packet as the payload for that packet. The information contained in the *<type>* field is exactly one character and is case-significant. The information contained in *<value>* is a structured text string. The protocol permits proprietary extensions to the list of various types which are permitted, by using the type *a* for attribute. Values of type *a* can optionally be used for the entire session, but alternatively may only be used for particular components within the session.

SDP is stated to be usable for transmitting encryption keys for one-to-one key exchange mechanisms. However, the background art does not teach or suggest the use of SDP for transmitting security information through the use of the a or attribute parameter. The present invention uses the attribute parameter for associating an ECM with the relevant session and/or a portion of the session, by transmitting the ECM as the value for the attribute. In addition, the attribute parameter could also optionally be used in order to limit access to different portions of any given service, for example based upon payment schemes or authority levels. For example, the line containing the ECM information could optionally have the format *a=ecm:<CASID><IP address>< UDP port#>*, in which "CASID" is an optional parameter for identifying the vendor of the particular system.

Another IPSEC standard which is optionally and preferably used for the present invention is the ESP (IP encapsulating security payload) protocol, as described in RFC 2406. The ESP format is optionally and preferably used in order to encapsulate encrypted content and to synchronize content packets with ECM information. ESP provides a header, containing information about security services, which is intended to be inserted after the IP header and before the upper layer protocol header for IP packets being transmitted in the transport mode. According to the standard, ESP is used to provide confidentiality, data origin authentication, connectionless integrity and limited traffic flow confidentiality.

The first value in the ESP header is the 32-bit security parameters index (SPI), which is stated in the standard to be used for uniquely identifying the Security Association for the packet, in combination with the destination IP address and the security protocol. The present invention uses the SPI value in order to associate a packet containing encrypted media content with the ECM that is required to generate the key which encrypted that media content. More preferably, client database **260** contains a table for determining this association, such that the SPI is at least part of a set of information for identifying the correct ECM for the media content, and hence the correct key which is to be used for decrypting the encrypted media content. Optionally, this set of information also includes the destination IP address, the protocol being used (such as ESP for example) and the port to which the media content is sent. The port information is preferred when the security information, such as the ECM, is sent to a particular port of end user device **210**, for example when multiple vendors may supply end user device **210**. However, only the SPI is preferably used in order to be able to announce to security module **220** that the ECM or other security information has been changed when the key period changes. Therefore, a range of SPI values is preferably provided, such that each of change of SPI value indicates a change to the required ECM, and hence to the key which must be generated in order to be able to decrypt the media content.

The background art does not teach or suggest the use of SPI values for indicating the initiation of a new key period, and hence the change of ECM information which is required. However, this implementation is particularly useful since it enables security module **220** to receive a plurality of different ECMs in advance of their actual use, without compromising the ability of broadcaster headend **250** to still control access by end user device **210**. Without the SPI value itself, more preferably end user device **210** is not able to determine the correct ECM to be used to generate the key, since as previously described, the SPI is at least a part of the set of information which is required for determining the correct ECM to be used for decrypting or otherwise accessing the media content. Furthermore, the advantage of the SPI over background art methods for synchronization, such as using a binary (odd/even) value for synchronizing between the ECM and the media content, is that the SPI can optionally have a large range of values. In a non-reliable/potentially latent environment such as the Internet, which does not guarantee delivery of packets and which may as a result have a large latency period for such delivery, the large range of values effectively removes the dependence of each packet from the previous packet, so that receiving packets out of transmission order and/or even failing to receive a packet would not disrupt the security scheme.

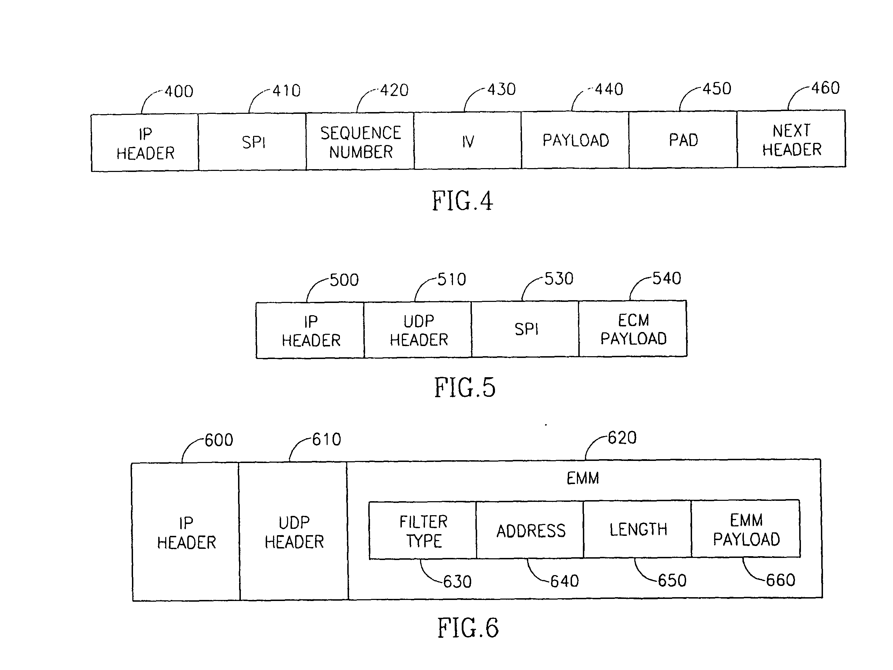

According to an exemplary but preferred implementation of the present invention, the format of each encrypted media content packet is preferably as shown in Figure 4. As shown, an IP header **400** for the packet is followed by the SPI value **410**, as determined by the ESP standard as previously described. Next, a 32-bit sequence number **420** is included, also as determined by the ESP standard. Sequence number **420** starts at the value "1" and is monotonically increased for each packet until the maximum value (2³²-1) is reached, at which point the associated SPI value **410** is no longer valid and the next SPI value from the range of permitted values must be used. In fact, the maximum value may not be reached, since sequence number **420** is preferably reset for each key period when both the security information for the key and SPI **410** change.

The next value in the encrypted packet is optionally and more preferably an initialization vector (IV) **430**, which may be required for operating certain types of encryption methods such as RC4, for example in order to improve the strength of the encryption by increasing the randomness thereof, as is known in the art. The format and length of IV **430** depend upon the particular encryption method.

The packet next features the encrypted media content itself, which is shown as a payload **440** for the packet. Payload **440** may also optionally include such information as the transport layer (UDP or TCP) header. After payload 440**,** the packet preferably features a PAD length **450** of one byte, which is always equal to zero. The packet then optionally and preferably features a next header **460**, the value of which preferably depends upon the type of data which is included after the ESP header, in order to indicate whether the packet is being transmitted in transport mode or tunnel mode.

Figure 5 shows an exemplary format for ECM packets, which are preferably encapsulated as regular clear UDP packets. As shown, the ECM packet features an IP header **500,** followed by a UDP header **510**. After UDP header **510**, a UDP payload **520** more preferably has two components: an SPI **530** for indicating the correct associated SPI value for the ECM information, and an ECM information payload **540**, which contains the actual ECM information. However, substantially any other suitable format of packet could be used for transmitting the ECM information, as long as the ECM information is somehow associated with the correct SPI, so that end user device **210** is able to determine which ECM should be used with received encrypted media content.

Preferably, verification module **300** is able to filter ECM packets in order to determine which such packets are relevant to security module **220** (both not shown; see Figure 3). Such filtration is optionally and more preferably performed by comparing previously distributed information from the announcement message about the association between the content and the combination of the IP multicast, UDP port and SPI values from the ECM packet, which are most preferably provided in the header. Most preferably, the IP address of the ECM packet is announced with the announcement message, as previously described, such that security module **220** may effectively "filter" the ECM packets by only listening to those IP address(es) for ECM packets for which security module **220** has an authorization, for example from the relevant EMM. Thus, only relevant ECM packets are preferably passed to security module **220**.

According to other preferred embodiments of the present invention, and as specifically described with regard to Figure 6, the EMM information, such as the service identifier(s), is transmitted in a packet having a particular structure. This packet is then more preferably filtered by end-user client **240** and/or verification module **300** (see Figure 3) in order to determine if the EMM information is relevant to the particular end user device **210** before the EMM packet is delivered to security module **220** of that end user device **210**. Such filtration is preferred in order to avoid overwhelming security module **220** with a huge amount of non-relevant EMM information.

In order to assist end-user client **240** to rapidly filter EMM packets, optionally and more preferably such packets have the structure shown in Figure 6. As shown, an exemplary EMM packet format is described with regard to implementation as an IP/UDP packet. The packet features an IP header **600** and a UDP header **610**. Next, at least one, and preferably a plurality of, EMM **620** are included. Each EMM **620** optionally and more preferably features a filter type **630**, which may be unique, group or general. Filter type **630** determines whether each EMM is allocated to a single IP address for a particular end user/subscriber (unique), all IP addresses (general) or a group of IP addresses (group). For both group and general addresses, the EMM may optionally be sent on a fixed multicast IP address, which could then be distributed based on regions in order to optimize EMM delivery performance and client performance. Such a multicast IP address may optionally be configured according to MADCAP (Multicast Address Dynamic Client Allocation Protocol) for example. Filter type **630** may also optionally and more preferably contain information related to a particular characteristic or characteristics which are stored on security module **220**, such as a smart card for example, and/or are otherwise stored on, or accessible to, end-user client **240** (both not shown; see Figure 3). One non-limiting example of such a characteristic would be an identifier for security module **220** itself, such as a smart card identifier for example.

Similarly, after each filter type **630**, an address **640** contains information as to whether the EMM is unique, group or general in type. A length field **650** is then used, after which an EMM payload **660** contains the actual EMM information. This packet structure is one example of a format which may be optionally implemented for greater ease of filtering by end-user client **240.**

EMMs may also optionally and alternatively or additionally be sent by e-mail as e-mail messages over the SNMP (simple network message protocol) protocol, such that end-user client **240** and/or end user device **210** could then optionally retrieve the EMMs as e-mail messages, for example at the initialization of operation of end user device **210** for each session.

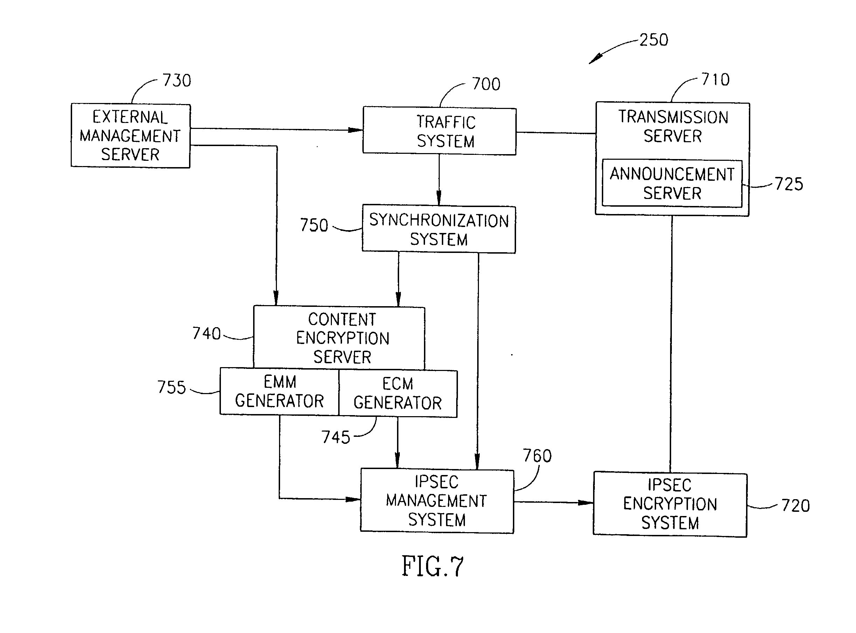

Figure 7 shows a schematic block diagram of a preferred embodiment of broadcaster headend **250**. As shown, broadcaster headend **250** optionally and preferably features a plurality of components for performing encryption of the media content, and for synchronizing transmission of encrypted or otherwise protected media content and the corresponding security information and/or access schemes for determining access to the protected media content. A traffic system **700** receives information about the media content, metadata and schedules of new IP sessions. Traffic system **700** also preferably ensures that sufficient bandwidth is available on channel **205** (not shown) and/or within broadcaster headend **250** before scheduling IP sessions. In addition, traffic system **700** optionally and more preferably determines if the media content is within an authorized size range. If sufficient bandwidth is available and/or if other criteria are met, then traffic system **700** preferably generates the appropriate access criteria for being included in the ECM, and configures the system-wide security association parameters, which are required for enabling end user device **210** to eventually obtain access to the protected media content. Examples of access criteria include but are not limited to, price (particularly for the previously described pay-per-view system), parental rating and "blackout" criteria, which are criteria for determining whether a particular end user device **210** may not be granted access to the associated content. Traffic system **700** may optionally be implemented as a traditional television traffic system or data content provider system. In the latter type of system, the content provider has remote access to the system in order to define and schedule multicast sessions asynchronously as desired.

Once traffic system **700** has scheduled the new IP session, with the appropriate security parameters, information about the IP session is preferably passed to a transmission server **710**. Transmission server **710** preferably announces each IP session and transmits the content to the appropriate IP address and UDP port of end user device **210** according to the schedule which is determined by traffic system **700**. The media content and associate security information is then preferably passed to an IPSEC encryption system **720** for encryption and packaging into packets ("packetization") as described in greater detail below.

Transmission server **710** itself optionally and more preferably also features a separate announcement server **725** for creating and transmitting announcement messages, for example according to the SDP standard as previously described. Announcement server **725** preferably receives information from traffic system **700** concerning the schedule for the IP session, addresses of content and an ECM address pair (IP address and client port address), as well as the identifier for the ECM itself. The announcement message preferably includes all of these different types of information, and is preferably transmitted on a well known port address, although the session itself may optionally be conducted on different client ports. The address for the announcement may itself optionally be transmitted to each end user device **210** (not shown) automatically through standard digital video broadcast (DVB) streams such as the program specific information (PSI) and/or programming mapping table (PMT) streams, or the service information (SI) or service definition table (SDT) streams.

Turning back to traffic system **700**, the information concerning the media content to be transmitted, the identity of the recipient end user devices **210**, optionally subscriber information and other types of information are preferably sent from an external management server **730,** which manages and configures separate network entities. Examples of such entities include, but are not limited to, subscribers, addresses, access criteria and bandwidth. External management server **730** also passes the necessary information to, and manages the activities of, a content encryption server **740**, which may optionally operate according to any standard encryption method, including but not limited to, AES (advanced encryption standard), and DES.

Content encryption server **740** is also optionally and preferably in communication with a synchronization system **750**. Synchronization system **750** preferably synchronizes the transmission of announcement messages, media content and ECMs, after receiving information about the IP sessions from traffic system **700**. The transmission of EMMs is not necessarily synchronized with the transmission of these other messages, as long as the service identifier(s) are transmitted in a timely manner before the ECM is to be received and/or used. Furthermore, an EMM is not necessarily transmitted at all, such as for the optional "pay per view" mechanism, which as previously described does not require EMMs for operation. Synchronization system **750** also more preferably assigns all system addresses, including IP and port addresses.

Once the session has been scheduled, the security information has been selected (including at least one ECM for encrypting the media content), and the content has been synchronized with the security information, content encryption server **740** then encrypts the actual media content itself. More preferably, the media content is encrypted with the key which would be generated from the ECM, as received by the end user device (not shown; see Figure 3). Optionally and most preferably, content encryption server **740** contains an ECM generator **745** for generating the security information. ECM generator **745** generates a control word for actually encrypting the media content.

The same control word must then be generated again at the end user device (not shown) in order for the media content to be accessed and displayed. The ECM itself must also be generated from at least the control word, and more preferably also from access criteria, concerning those end user devices (not shown) which are allowed to have access to the media content. However, the present invention is not limited to this type of mechanism, but may also include implementations in which ECM generator **745** does not generate the control word, which is instead generated separately by a separate control word generating module (not shown). For the latter type of implementation, preferably ECM generator **745** generates the ECM from a combination of the control word and access information.

Next, ECM generator **745** preferably schedules transmission of the corresponding ECM and transmits the ECM when ready. Also, ECM generator **745** optionally and preferably inserts the SPI within the packet containing the ECM information, as previously described. If the SPI is used, then ECM generator **745** also optionally and preferably increments the SPI counter at each key period change, also as previously described.

A corresponding service identifier is preferably determined (as one type of access criteria) for association with an ECM, in order to be able to inform the end user devices as to whether they are authorized to use the ECM. The EMM information (service identifier) is preferably placed in a EMM by a separate EMM generator **755**. The EMM information is optionally sent on a fixed multicast IP address and port to the end user devices.

The encrypted content is then passed to an IPSEC management system **760**, which manages the process of forming packets and including the IPSEC encryption information at IPSEC encryption system **720**. IPSEC management system **760** more preferably manages the security policy database and the security association database based upon input received from synchronization system **750** and content encryption server **740**. IPSEC management system **760** optionally and preferably stores information in the security association database concerning the type of encapsulation protocol for creating the packets, such as ESP for example as previously described; the type of encryption method which is used for encrypting the actual media content, such as RC4, DES or 3DES, for example; the type of IP mode for transmitting the packet, such as transport mode for example; and information about the initialization vector (IV) if in fact one such vector exists.

IPSEC management system **760** also preferably merges the control word, security association parameters and SPI information with IP multiplexing information.

IPSEC encryption system **720** preferably performs two functions: encryption according to the IPSEC standards, and packet formation. The packets are formed by receiving the incoming encrypted content and associated information, according to the IPSEC standards as previously described. More preferably, the packets are formed by adding the ESP header with the appropriate SPI to the encrypted content, after which the packets are transmitted. Optionally and more preferably, packets containing security information such as ECMs and EMMs, and also announcement messages, are forwarded for distribution through the IP network without being transformed into packets by IPSEC encryption system **720**. IPSEC encryption system **720** then performs encryption of the packet contents as required.

According to optional but preferred embodiments of the present invention, the previously described management and encryption system may be optionally implemented with Simulcrypt protocols. These protocols enable an IPSEC-enabled encryptor, such as IPSEC encryption system **720** for example, to encrypt the IP content (streams or files) once based on a unique key (or control word) generated by a local key generator. This key may then optionally be sent over standard Simulcrypt protocols to multiple separate ECM generators of separate CA (content access) systems to enable secure ECM delivery across these different content access systems. In other words, with one encrypted content stream and/or file and one key or control word, multiple ECMs may be possible.

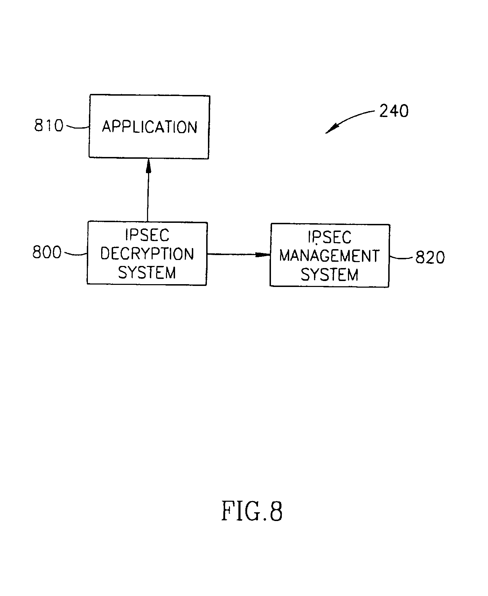

Figure 8 shows an exemplary but preferred implementation of end-user client **240** in greater detail. As shown, end-user client **240** preferably features an IPSEC decryption system **800** for receiving all packet data, which is preferably IP data, and also for decrypting such data if necessary. IPSEC decryption system **800** is preferably able to retrieve the necessary SPI and other security related information, in order to decrypt the packet data.

The decrypted data is then passed to an application **810** which has requested this data. Each application **810** preferably acts as a trigger for receiving more data, by opening a socket and receiving content from IPSEC decryption system **800**.

IPSEC decryption system **800** also preferably communicates with an IPSEC management system **820** for implementing the security policy database and security association database, for storing the necessary security information. Such information is optionally stored in client database **260** (not shown; see Figure 3). IPSEC management system **820** preferably manages EMM information and other security information as well, including, but not limited to, source IP and source port addresses; destination IP and port addresses; SPI, control word and IP multiplexing information. IP multiplexing information may include such information as the type of encryption algorithm, initialization vector, transport or tunnel mode, and so forth. All of these components are preferably in communication with security module **220** and/or verification module **300** (not shown; see Figure 3). Optionally, IPSEC management system **820** also manages the functions of security module **220** as well.

One optional embodiment for the present invention involves membership revocation for an end user device which has left a group, involving revocation of authorization for service identifiers and/or limiting the key period for the service identifiers. The remaining group members then require reauthorization, although with short key periods, such reauthorization would be frequently performed without a special procedure. It is even possible to make a reauthorization necessary within a multi-cast session. The local security module could optionally prevent access to the service identifiers and/or other authorization information. As an example, a system of rules for this usage of service identifiers is optionally and preferably determined at the broadcaster headend, and then transmitted to the smartcard (security module). Revocation is optionally performed by sending information with an EMM, although alternatively or additionally, revocation is preferably performed with an ECM. For example, revocation is optionally performed by sending an EMM hidden within an ECM, thereby causing the smart card or other local security module to obtain or lose authorization, according to the desired outcome.

The method of the present invention also avoids another major loophole and problem for multicast security, with regard to key sharing conspiracies. In the standard model in the background art, the keys can be shared quite easily, since they tend to last a long time. In the present invention, the keys (control words) are preferably changed very often according to a relatively short key period, so sharing is more difficult, certainly for streaming data. This solution also prevents the reuse of old keys and/or old content, since any current key is then preferably unable to decrypt previous or future transmissions of content. Standard models for multicast in the background art do not deal with this problem efficiently.

The previous discussion has clearly demonstrated the utility of the present invention in a broadcaster-controlled network environment, in which one broadcaster transmits data to a plurality of end user devices simultaneously through a network, particularly a packet-based network in a non-reliable environment or at least an environment in which reliability is not guaranteed, such as the Internet or other IP network. Other security mechanisms have been developed for such network environments, but they have not been shown to be useful for broadcast data, as they are concerned with security for a session between two parties.

As an example, the SSL (secure sockets layer) protocol may be considered. SSL is clearly only useful for secure, reliable communication between two hosts through a network, unlike the present invention, such that SSL is not only not intended for multicasting, but in fact is not usable for multicasting. SSL also relies upon a trusted certificate authority; once both parties have received such certificates, they mutually trust each other completely. By contrast, the present invention requires continuous or at least repeated authentication of the end user device, thereby preventing an unauthorized user from gaining initial access and then continuing to receive services from the broadcaster. Also, SSL only supports the TCP/IP connection protocol, but does not operate over the UDP connectionless protocol, while the method of the present invention works with both the connection and connectionless protocols. Thus, SSL is not scalable to a large number of end user devices, while the present invention is scalable to such a large number of end user devices.

According to another preferred embodiment of the present invention, there is provided a mechanism for transferring content through a "peer-to-peer" system. The term "peer-to-peer" refers to the transfer of data, such as the content and/or associated security information, between end user devices. This preferred embodiment may be used to reduce the load on the central server or other central authorization entity.

There are various scenarios that are possible in order to manage peer-to-peer sessions. The simplest model preferably features a security server at each peer end user device. The security server could optionally be implemented with any platform which is capable of secure storage and secret cryptographic calculations, whether in protected hardware or software. One non-limiting example of such a platform is a smart card with a smart card reader. Each such security server would be capable of all the procedures previously described as occurring in the host, at the broadcaster/broadcaster headend in Figure 3, for example. Each host can optionally and preferably generate its own list of service identifiers and Control Words or another type of key to be used to authorize any other peer end user device (or set of hosts), and to encrypt communications.

Authorizations are more preferably performed with locally generated EMMs signed by the local security server, while data is more preferably encrypted by the local security server. SDP announcements would be generated locally and digitally signed to authenticate the session call. One potential drawback of this mechanism is the significant potential for collisions for all elements, particularly with regard to service identifiers. Therefore, as a preferred feature, for all sessions with a membership group of peer devices, each local host would optionally and preferably coordinate through a central host, a Group Controller. This coordination could optionally occur in advance of a specific session; for example, each new local host which becomes a member is then assigned a range of service identifiers, for example. Alternatively, this coordination could optionally be performed through the packet-based network in "real time", such that before or at the start of each session, the local host would request an identifier from the Group Controller (GC). This GC is preferably not a classic Group Controller as defined in the discussions above, but would have a very limited function of coordination, with minimal overhead.

Once recourse is made to Group Controller involvement in peer to peer interactions, a model may optionally and more preferably be implemented in which the Group Controller plays an even more significant role in the peer to peer session. In addition to the coordination and assignment of service identifiers, the Group Controller may also optionally schedule all synchronization requirements for the system including announcements and access criteria generation. Optionally and most preferably, the GC generates the ECMs to be transmitted, while locally generating the CW (control word; used for local creation of the control word as previously described).

For local hosts that are very limited in terms of computational power and/or bandwidth, the model is optionally altered to enable all elements to be generated and/or coordinated by the GC, including data encryption and CW generation, apart from the setup parameters, which are defined by the local hosts.

An intermediate version of the above model preferably features a general broadcaster headend (as for Figure 3, for example) to register a session and to generate a steady flow of CW to encrypt and decrypt peer to peer sessions. Such a model may be preferably implemented if the local headend is not considered secure enough to have a CW generator on-site, particularly in cases where the CW generator is implemented in software. For this model, each EMM carrying service identifiers is supplied by the central, general headend upon registration, but alternatively may be generated by each peer for another peer.

Any suitable combination of the above features is considered to be within the scope of the present invention, and may optionally be implemented as practicable depending upon the needs of the specific session, and the capabilities of the hosts.

An additional, optional configuration of the peer to peer model would be a variation on the tree model of distribution (and authentication) by using a cluster model. The cluster would preferably have special attributes, where any given peer would reside in a cluster, and a specific topology of other peers would be established for each session (like a flat tree model), such that any change to that topology would affect some change in either authentication or distribution. For example, other peer devices would optionally and preferably be allowed to introduce new peer devices to the topology. This model could be effective in supporting various superdistribution models, for example where there are business rules that allow the redistribution of content from receivers of that content, under certain specified conditions.

Such a model could optionally be specifically implemented according to the preferred embodiments of the present invention by enabling a local peer device, which has been authorized by an EMM for a specific service identifier, to send a new EMM for authorizing another host for that service identifier. If tighter control is desired, then another service identifier is most preferably required, which would then be reported back to the originating service provider (such as the broadcaster of Figure 3, for example), which is an example of a central authorization entity. The central authorization entity preferably at least coordinates the cluster, and more preferably continuously validates the cluster.

Once the new service identifier is received, the provider could then add this service identifier to the list that becomes included in the ECM for decryption access. This avoids passing control of the new peer device from the interested peer device to a central authorizing authority, without involving any need to decrypt and re-encrypt at the local host level.

Based on the previous model, local clusters of peer devices could optionally generate specific groups of requests to the central server which then arbitrates sessions to other clusters of such peer devices.

Alternatively or additionally, the local peer device is preferably able to receive an ECM, use the control word to encrypt local content (through the security module such as the smart card) and then transmit such encrypted content to other peer devices. Alternatively, if the peer device is not able to perform encryption locally, or if the data is such that it does not require encryption, the generated control word could optionally still be used as a basis (or seed) for a hashed signature scheme, for example by using the smart card for generating the signature.

However, the requirement for a certain level of computational ability of the peer device is a feature of these preferred embodiments. For example, if the peer devices are required to generate announcements, such as SPI messages, and/or EMMs, as well as to deliver content, a certain amount of buffer space is required to store all incoming CWs and SPI messages for decrypting. The generation of ECMs is most preferably kept at a central ECM generator, both for security reasons and to reduce the computational load on the peer devices.

Optionally and more preferably, peer devices are distinguished with different levels of authorization and/or abilities. For example, some peer devices can view and write to all other devices, while some such devices can only view or write to certain devices, etc. Optionally, some peer devices may only be allowed to transmit content based upon the type of service identifier.

According to other optional but preferred embodiments of the present invention, EMMs are delivered out of band (that is, separately from the content). For example, EMMs could optionally and preferably be delivered through encrypted (or open) e-mail messages. Using IETF standards such as Privacy Enhanced Mail (PEM) or MIME Object Security Services, or non-IETF PGP (Pretty Good Privacy). Unfortunately, delivery by e-mail messages again raises the issue of scalability. If the email message should be secured, then finding and using public keys is a problem. Such keys could optionally be cached locally or obtained from a public directory, although this may cause the processing overhead to become very high with a very slow distribution. Thus, preferably this mechanism is not used for key distribution, but only for EMM distribution, which could optionally be performed without encryption, such that only authentication signatures are preferably required, as a replacement for e-mail message invitations to multi-cast sessions.

According to other optional embodiments of the present invention, particularly with regard to peer-to-peer distribution of content, content is authenticated by authenticating the source. For example, a signature or other secret information could optionally be added for this purpose, such as an identifier for the source device (such as the source security module), and/or a public key signature. Preferably, however, the signature or other secret information is used as a seed to a simple hash function, which then enables the end user device to rapidly authenticate the source of the information.

While the invention has been described with respect to a limited number of embodiments, it will be appreciated that many variations, modifications and other applications of the invention may be made.

## Claims

1. A method for creating a secure digital media content transmission mechanism for a plurality of end user devices (210) in an Internet Protocol (IP) packet-based network (205) without requiring one-to-one key exchange, the method comprising:
providing a plurality of packets;
securing said plurality of packets according to security information to form secured packets, the security information being changed according to a key period, the security information including control word information for key generation at each of the end user devices (210);
multicasting an entitlement control message to the end user devices (210) through the IP packet-based network (205), the entitlement control message including the control word information, the entitlement control message including first address information;
multicastitig the secured packets to the end-user devices (210) through the IP packet-based network (205), the secured packets including second address information;
creating an announcement according to an announcement protocol, the announcement including the second address information of the secured packets and the first address information of the entitlement control message;
transmitting the announcement to the end user devices (210) thereby enabling matching between the secured packets and the entitlement control message in the end-user devices (210).

2. The method of claim 1, wherein said plurality of packets contain broadcast data from a broadcasting event.

3. The method of claim 1, wherein an EMM (entitlement control message) is also transmitted to said end user devices (210), such that EMM information contained in said EMM is required for said end user device (210) to access said ECM.

4. The method of claim 3, wherein said EMM is transmitted to said end user devices (210) by an out-of-band message, such that said EMM is not transmitted with said secured packets.

5. The method of claim 4, wherein said out-of-band message is an e-mail (electronic mail) message.

6. The method of any of claims 3-5, wherein the packet-based network (205) is an IP network (205) and said ECM is transmitted through said IP network (205) according to at least one of a multicast IP address and an IP port, such that said end user device (210) is notified of said at least one of said multicast IP address and said IP port through an IP notification protocol.

7. The method of any of claims 3-6, wherein said end user device (210) filters at least one of said ECM and said EMM according to at least one characteristic selected from the group consisting of a characteristic of said end user device (210) and a characteristic of information stored by said end user device (210).

8. The method of claim 7, wherein said end user device (210) filters said ECM according to EMM information, such that only an ECM for which EMM information has been received is accessed by said end user device (210).

9. The method of claim 8, wherein said ECM is contained in a packet, and an IP address for said packet is announced to said end user device (210), such that said end user device (210) filters said ECM by listening to said IP address for receiving said packet if said end user device (210) has received said EMM information.

10. The method of claim 7, wherein said end user device (210) filters at least one of said ECM and said EMM according to whether said at least one of said ECM and said EMM is designated as unique, group or general.

11. The method of any of claims 3 - 10, wherein said EMM information includes a service identifier, and wherein said service identifier is related to a type of content of said secured packets.

12. The method of claim 11, wherein said secured packets contain a plurality of different types of content, each type of content having a separate service identifier, such that differential access to said different types of content by said end user device (210) is provided according to said service identifiers.

13. The method of claims 11 or 12, wherein said service identifier corresponds to a plurality of ECMs.

14. The method of any of claims 3-13, wherein said EMM information includes an identifier for determining access to said secured packets according to at least one characteristic selected from the group consisting of a characteristic of an end user device (210) and a characteristic of information stored on said end user device (210).

15. The method of claim 14, wherein said identifier is a blackout identifier for identifying an end user device blocked from accessing a content of said ECM.

16. The method of claim 15, wherein said blackout identifier corresponds to at least one characteristic stored in said end user device.

17. The method of claim 16, wherein said at least one characteristic includes a geographical location of said end user device (210).

18. The method of any of claims 3 - 17, wherein said ECM enables differential access to said secured packets by said end user device (210) according to a plurality of identifiers transmitted in said EMM.

19. The method of any of claims 3-18, wherein said end user device (210) stores at least a content of at least one of said ECM and said EMM.

20. The method of claim 19, wherein said ECM has a limited key period, such that a new ECM is periodically received to access said plurality of packets.

21. The method of claim 20, wherein a length of said key period is at least partially determined by a length of a session for receiving said secured packets by said end user device (210).

22. The method of claim 21, wherein said length of said key period is less than said length of said session, such that at least one of a new ECM and a new EMM must be received repeatedly during said session.

23. The method of claim 22, wherein said EMM has a limited authorization period, such that a new EMM is periodically received to access said plurality of packets.

24. The method of any of claims 3 - 23, wherein at least a portion of said secured packets are accessible with said ECM only, without said EMM, as a preview of said secured packets.

25. The method of any of claims 3 - 24, wherein said security information is transmitted according to a standard IP protocol.

26. The method of claim 25, wherein said packets are transmitted as part of a multi-cast session, and wherein an announcement for said session is transmitted according to a standard announcement protocol.

27. The method of claims 25 or 26, wherein said standard IP protocol is IPSEC.

28. The method of claim 27, wherein said announcement includes information for relating each ECM to a service identifier contained in an EMM

29. The method of claim 28, wherein said announcement protocol is SDP (session description protocol).

30. The method of claims 28 or 29, wherein said ECM is associated with at least a portion of a multi-cast session with said end user device (210), and wherein said association is transmitted in said secured packets as an attribute parameter.

31. The method of claim 30, wherein said ECM is synchronized with said secured packets with an SPI (security parameters index) value of said secured packets.

32. The method of claim 31, wherein a new key period is indicated by a change in said SPI value, such that a new ECM is required to access said secured packets.

33. The method of any of claims 26 - 32, wherein announcement packets are encrypted.

34. The method of any of claims 14 - 33, wherein said end user device (210) is blocked from further access to said secured packets through revocation with at least one of an EMM and an ECM.

35. The method of claim 34, wherein said revocation is for a specific end user device.

36. The method of claim 35, wherein said revocation is for a plurality of end user devices (210).

37. The method of any of claims 34 - 36, wherein said revocation causes a new service identifier to be required for accessing a content of an ECM corresponding to said secured packets.

38. The method of any of claims 3-37, wherein said end user devices (210) receive at least said secured packets from at least one peer end user device (210).

39. The method of claim 38, wherein said at least one peer end user device (210) generates at least one of said EMM and said ECM.

40. The method of claim 39, wherein said at least one peer end user device (210) includes a secure server for generating said least one of said EMM and said ECM.

41. The method of claims 39 or 40, wherein said EMM generated by said at least one peer end user device (210) is authenticated by a central authorization entity.

42. The method of claims 39 - 41, wherein said EMM generated by said at least one peer end user device (210) is mapped to a new ECM for accessing said secure packets by a central authorization entity.

43. The method of any of claims 39 - 42, wherein said packets are transmitted as part of a multi-cast session, an announcement for said session is transmitted according to a standard announcement protocol, and said announcement includes at least an SPI (security parameters index) for relating each ECM to a service identifier contained in an EMM, such that said at least one peer end user device (210) generates at least one of said announcement and said SPI.

44. The method of any of claims 32 - 43, wherein said central authorization entity controls at least one of said ECM, said EMM, said announcement and said SPI.

45. The method of any of claims 32 - 44, wherein at least one of said EMM and said ECM is generated by said central authorization entity.

46. The method of any of claims 32 - 45, wherein said end user devices (210) arc located in a cluster, and wherein each cluster is coordinated by said central authorization entity.

47. The method of claim 46, wherein said cluster is continuously validated by said central authorization entity.

48. The method of any of claims 3 - 47, wherein a pay-per-view ECM contains purchasing information for purchasing access to said secured packets and wherein EMM information is not required to access said pay-per-view ECM.

49. The method of any of claims 3-47, wherein an EMM contains a credit for purchasing access to said secured packets for pay-per-view content.

50. A secure digital media content transmission mechanismcomprising means adapted to implement the steps, of any of claims 1 - 49.

51. The method according to claim 1 and also comprising:
providing a broadcast CA system comprising at least one CA security characteristic,
and wherein the packet-based network (205) includes a packet-switched data transmission system including a security subsystem having a plurality of packet-switched security characteristics, and
the securing said plurality of packets includes:
creating a mapping from the at least one CA security element to at least one of the plurality of packet-switched security elements, thereby producing a packet CA system; and
securing said plurality of packets in accordance with the packet CA system.

52. The method according to claim 51 and wherein the packet-switched data transmission system comprises an IP system.

53. The method according to claim 52 and wherein the IP system comprises an IPSEC subsystem, and
the IPSEC subsystem comprises the plurality of packet-switched security elements.

54. The method according to any of claims 51 - 53 and wherein the broadcast CA system comprises an EMM / ECM based CA system.

55. A secure digital media content transmission system for use in a packet-switched environment (packet CA system) comprising means adapted to implement the steps of any of claims 51 - 54.

## Patentansprüche

1. Verfahren zum Erzeugen eines sicheren Digitalmedieninhalt-Übertragungsmechanismus für eine Vielzahl von Endbenutzervorrichtungen (210) in einem Internet-Protokoll- bzw. IP-paketbasierten Netzwerk (205), ohne eineindeutigen Schlüsselaustausch zu erfordern, das Verfahren umfassend:
Bereitstellen einer Vielzahl von Paketen;
Sichern der Vielzahl von Paketen gemäß Sicherheitsinformationen, um gesicherte Pakete zu bilden, wobei die Sicherheitsinformationen gemäß einer Schlüsselperiode gewechselt werden, wobei die Sicherheitsinformationen Kontrollwortinformationen für Schlüsselerzeugung an jeder der Endbenutzervorrichtungen (210) enthalten;
Rundsenden einer Berechtigungskontrollnachricht an die Endbenutzervorrichtungen (210) durch das IP-paketbasierte Netzwerk (205), wobei die Berechtigungskontrollnachricht die Kontrollwortinformationen enthält, wobei die Berechtigungskontrollnachricht erste Adressinformationen enthält;
Rundsenden der gesicherten Pakete an die Endbenutzervorrichtungen (210) durch das IP-paketbasierte Netzwerk (205), wobei die gesicherten Pakete zweite Adressinformationen enthalten;
Erzeugen einer Ankündigung gemäß einem Ankündigungsprotokoll, wobei die Ankündigung die zweiten Adressinformationen der gesicherten Pakete und die ersten Adressinformationen der Berechtigungskontrollnachricht enthält;
Übertragen der Ankündigung an die Endbenutzervorrichtungen (210), wobei Inübereinstimmungbringen zwischen den gesicherten Paketen und der Berechtigungskontrollnachricht in den Endbenutzervorrichtungen (210) ermöglicht wird.

2. Verfahren nach Anspruch 1, wobei die Vielzahl von Paketen Rundfunkdaten von einem Rundfunkübertragungsereignis enthält.

3. Verfahren nach Anspruch 1, wobei außerdem eine EMM (Berechtigungskontrollnachricht) an die Endbenutzervorrichtungen (210) übertragen wird, so dass in der EMM enthaltene EMM-Informationen für die Endbenutzervorrichtung (210) zum Zugreifen auf die ECM erforderlich sind.

4. Verfahren nach Anspruch 3, wobei die EMM durch eine Außerbandnachricht an die Endbenutzervorrichtungen (210) übertragen wird, so dass die EMM nicht mit den gesicherten Paketen übertragen wird.

5. Verfahren nach Anspruch 4, wobei die Außerbandnachricht eine E-Mail- bzw. elektronische Post-Nachricht ist.

6. Verfahren nach einem der Ansprüche 3-5, wobei das paketbasierte Netzwerk (205) ein IP-Netzwerk (205) ist und die ECM durch das IP-Netzwerk (205) gemäß mindestens einem einer Rundsende-IP-Adresse und eines IP-Ports übertragen wird, so dass die Endbenutzervorrichtung (210) über das mindestens eine der Rundsende-IP-Adresse und des IP-Ports durch ein IP-Benachrichtigungsprotokoll benachrichtigt wird.

7. Verfahren nach einem der Ansprüche 3-6, wobei die Endbenutzervorrichtung (210) mindestens eine der ECM und der EMM gemäß mindestens einem Charakteristikum, ausgewählt aus der Gruppe, bestehend aus einem Charakteristikum der Endbenutzervorrichtung (210) und einem Charakteristikum von Informationen, die von der Endbenutzervorrichtung (210) gespeichert sind, filtert.

8. Verfahren nach Anspruch 7, wobei die Endbenutzervorrichtung (210) die ECM gemäß EMM-Informationen filtert, so dass nur auf eine ECM, für die EMM-Informationen empfangen wurden, von der Endbenutzervorrichtung (210) zugegriffen wird.

9. Verfahren nach Anspruch 8, wobei die ECM in einem Paket enthalten ist und eine IP-Adresse für das Paket der Endbenutzervorrichtung (210) angekündigt wird, so dass die Endbenutzervorrichtung (210) die ECM durch Horchen auf die IP-Adresse zum Empfangen des Pakets filtert, wenn die Endbenutzervorrichtung (210) die EMM-Informationen empfangen hat.

10. Verfahren nach Anspruch 7, wobei die Endbenutzervorrichtung (210) mindestens eine der ECM und der EMM je nachdem filtert, ob die mindestens eine der ECM und der EMM als einmalig, Gruppe oder allgemein bezeichnet ist.

11. Verfahren nach einem der Ansprüche 3-10, wobei die EMM-Informationen eine Dienstkennung enthalten und wobei die Dienstkennung zu einem Inhaltstyp der gesicherten Pakete in Beziehung steht.

12. Verfahren nach Anspruch 11, wobei die gesicherten Pakete eine Vielzahl von verschiedenen Inhaltstypen enthalten, wobei jeder Inhaltstyp eine getrennte Dienstkennung aufweist, so dass verschiedener Zugriff auf die verschiedenen Inhaltstypen durch die Endbenutzervorrichtung (210) gemäß den Dienstkennungen bereitgestellt wird.

13. Verfahren nach Anspruch 11 oder 12, wobei die Dienstkennung mit einer Vielzahl von ECMs korrespondiert.

14. Verfahren nach einem der Ansprüche 3-13, wobei die EMM-Informationen eine Kennung zum Bestimmen von Zugriff auf die gesicherten Paketen gemäß mindestens einem Charakteristikum, ausgewählt aus der Gruppe, bestehend aus einem Charakteristikum einer Endbenutzervorrichtung (210) und einem Charakteristikum von Informationen, die in der Endbenutzervorrichtung (210) gespeichert sind, enthalten.

15. Verfahren nach Anspruch 14, wobei die Kennung eine Versorgungsunterbrechungskennung zum Identifizieren einer Endbenutzervorrichtung ist, die vom Zugreifen auf einen Inhalt der ECM gesperrt ist.

16. Verfahren nach Anspruch 15, wobei die Versorgungsunterbrechungskennung mit mindestens einem in der Endbenutzervorrichtung gespeicherten Charakteristikum korrespondiert.

17. Verfahren nach Anspruch 16, wobei das mindestens eine Charakteristikum einen geografischen Standort der Endbenutzervorrichtung (210) enthält.

18. Verfahren nach einem der Ansprüche 3-17, wobei die ECM verschiedenen Zugriff auf die gesicherten Paketen durch die Endbenutzervorrichtung (210) gemäß einer Vielzahl von in der EMM übertragenen Kennungen gestattet.

19. Verfahren nach einem der Ansprüche 3-18, wobei die Endbenutzervorrichtung (210) mindestens einen Inhalt von mindestens einer der ECM und der EMM speichert.

20. Verfahren nach Anspruch 19, wobei die ECM eine begrenzte Schlüsselperiode aufweist, so dass eine neue ECM periodisch empfangen wird, um auf die Vielzahl von Paketen zuzugreifen.

21. Verfahren nach Anspruch 20, wobei eine Länge der Schlüsselperiode mindestens teilweise durch eine Länge einer Sitzung zum Empfangen der gesicherten Pakete durch die Endbenutzervorrichtung (210) bestimmt wird.

22. Verfahren nach Anspruch 21, wobei die Länge der Schlüsselperiode kürzer ist als die Länge der Sitzung, so dass mindestens eine einer neuen ECM und einer neuen EMM wiederholt während der Sitzung empfangen werden muss.

23. Verfahren nach Anspruch 22, wobei die EMM eine begrenzte Autorisierungsperiode aufweist, so dass eine neue EMM periodisch empfangen wird, um auf die Vielzahl von Paketen zuzugreifen.

24. Verfahren nach einem der Ansprüche 3-23, wobei mindestens ein Abschnitt der gesicherten Pakete mit nur der ECM ohne die EMM als eine Vorschau der gesicherten Pakete zugänglich ist.

25. Verfahren nach einem der Ansprüche 3-24, wobei die Sicherheitsinformationen gemäß einem standardmäßigen IP-Protokoll übertragen werden.

26. Verfahren nach Anspruch 25, wobei die Pakete als Teil einer Rundsendesitzung übertragen werden und wobei eine Ankündigung für die Sitzung gemäß einem standardmäßigen Ankündigungsprotokoll übertragen wird.

27. Verfahren nach Anspruch 25 oder 26, wobei das standardmäßige IP-Protokoll IPSEC ist.

28. Verfahren nach Anspruch 27, wobei die Ankündigung Informationen zum Inbeziehungsetzen jeder ECM mit einer in einer EMM enthaltenen Dienstkennung enthält.

29. Verfahren nach Anspruch 28, wobei das Ankündigungsprotokoll SDP (Sitzungsbeschreibungsprotokoll) ist.

30. Verfahren nach Anspruch 28 oder 29, wobei jede ECM mit mindestens einem Abschnitt einer Rundsendesitzung mit der Endbenutzervorrichtung (210) assoziiert ist und wobei die Assoziation in den gesicherten Paketen als ein Attributparameter übertragen wird.

31. Verfahren nach Anspruch 30, wobei die ECM mit den gesicherten Paketen mit einem SPI- bzw. Sicherheitsparameterindex-Wert der gesicherten Pakete synchronisiert wird.

32. Verfahren nach Anspruch 31, wobei eine neue Schlüsselperiode durch eine Änderung in dem SPI-Wert angezeigt wird, so dass eine neue ECM erforderlich ist, um auf die gesicherten Pakete zuzugreifen.

33. Verfahren nach einem der Ansprüche 26-32, wobei Ankündigungspakete verschlüsselt werden.

34. Verfahren nach einem der Ansprüche 14-33, wobei die Endbenutzervorrichtung (210) von weiterem Zugreifen auf die gesicherten Pakete durch Zurücknehmen mindestens einer einer EMM und einer ECM gesperrt wird.

35. Verfahren nach Anspruch 34, wobei die Zurücknahme für eine spezifische Endbenutzervorrichtung ist.

36. Verfahren nach Anspruch 35, wobei die Zurücknahme für eine Vielzahl von Endbenutzervorrichtungen (210) ist.

37. Verfahren nach einem der Ansprüche 34-36, wobei die Zurücknahme bewirkt, dass eine neue Dienstkennung zum Zugreifen auf einen Inhalt einer mit den gesicherten Paketen korrespondierenden ECM erforderlich wird.

38. Verfahren nach einem der Ansprüche 3-37, wobei die Endbenutzervorrichtungen (210) mindestens die gesicherten Pakete von mindestens einer Partner-Endbenutzervorrichtung (210) empfangen.

39. Verfahren nach Anspruch 38, wobei die mindestens eine Partner-Endbenutzervorrichtung (210) mindestens eine der EMM und der ECM erzeugt.

40. Verfahren nach Anspruch 39, wobei die mindestens eine Partner-Endbenutzervorrichtung (210) einen sicheren Server zum Erzeugen der mindestens einen der EMM und der ECM enthält.

41. Verfahren nach Anspruch 39 oder 40, wobei die von der mindestens einen Partner-Endbenutzervorrichtung (210) erzeugte EMM durch eine zentrale Autorisierungsinstanz autorisiert wird.

42. Verfahren nach Anspruch 39-41, wobei die von der mindestens einen Partner-Endbenutzervorrichtung (210) erzeugte EMM durch eine zentrale Autorisierungsinstanz auf eine neue ECM zum Zugreifen auf die gesicherten Pakete abgebildet wird.

43. Verfahren nach einem der Ansprüche 39-42, wobei die Pakete als Teil einer Rundsendesitzung übertragen werden, eine Ankündigung für die Sitzung gemäß einem standardmäßigen Ankündigungsprotokoll übertragen wird und die Ankündigung mindestens einen SPI (Sicherheitsparameterindex) zum Inbeziehungsetzen jeder ECM mit einer in einer EMM enthaltenen Dienstkennung enthält, so dass die mindestens eine Partner-Endbenutzervorrichtung (210) mindestens eines der Ankündigung und des SPI erzeugt.

44. Verfahren nach einem der Ansprüche 32-43, wobei die zentrale Autorisierungsinstanz mindestens eines der ECM, der EMM, der Ankündigung und des SPI kontrolliert.

45. Verfahren nach einem der Ansprüche 32-44, wobei mindestens eine der EMM und der ECM von der zentralen Autorisierungsinstanz erzeugt wird.

46. Verfahren nach einem der Ansprüche 32-45, wobei die Endbenutzervorrichtungen (210) in einem Cluster angeordnet sind und wobei jedes Cluster durch die zentrale Autorisierungsinstanz koordiniert wird.

47. Verfahren nach Anspruch 46, wobei das Cluster kontinuierlich von der zentralen Autorisierungsinstanz validiert wird.

48. Verfahren nach einem der Ansprüche 3-47, wobei eine Einzelprogramm-Gebührenfemsehen-ECM Erwerbsinformationen zum Erwerben von Zugriff auf die gesicherten Pakete enthält und wobei EMM-Informationen zum Zugreifen auf die Einzelprogramm-Gebührenfernsehen-ECM nicht erforderlich sind.

49. Verfahren nach einem der Ansprüche 3-47, wobei eine EMM ein Guthaben zum Erwerben von Zugriff auf die gesicherten Pakete für Einzelprogramm-Gebührenfemsehen-Inhalt enthält.

50. Sicherer Digitalmedieninhalt-Übertragungsmechanismus, umfassend Mittel, die zum Implementieren von beliebigen der Ansprüche 1-49 angepasst sind.

51. Verfahren nach Anspruch 1 und außerdem umfassend:
Bereitstellen eines Rundfunk-CA-Systems, umfassend mindestens ein CA-Sicherheits-Charakteristikum;
und wobei das paketbasierte Netzwerk (205) ein paketvermitteltes Datenübertragungssystem enthält, das ein Sicherheits-Teilsystem mit einer Vielzahl von paketvermittelten Sicherheitscharakteristika enthält, und
die Sicherung der Vielzahl von Paketen enthält:
Erzeugen einer Abbildung von mindestens einem CA-Sicherheitselement auf mindestens eines der Vielzahl von paketvermittelten Sicherheitselementen, wodurch ein Paket-CA-System produziert wird; und
Sichern der Vielzahl von Paketen gemäß dem Paket-CA-System.

52. Verfahren nach Anspruch 51, und wobei das paketvermittelte Datenübertragungssystem ein IP-System umfasst.

53. Verfahren nach Anspruch 52, und wobei das IP-System ein IPSEC-Teilsystem umfasst, und
das IPSEC-Teilsystem die Vielzahl von paketvermittelten Sicherheitselementen umfasst.

54. Verfahren nach einem der Ansprüche 51-53, und wobei das Rundfunk-CA-System ein EMM/ECM-basiertes CA-System umfasst.

55. Sicheres Digitalmedieninhalt-Übertragungssystem zur Verwendung in einer paketvermittelten Umgebung (Paket-CA-System), umfassend Mittel, die zum Implementieren der Schritte von beliebigen der Ansprüche 51-54 angepasst sind.

## Revendications

1. Procédé destiné à créer un mécanisme de transmission de contenu multimédia numérique sécurisé pour une pluralité de dispositifs d'utilisateur final (210) dans un réseau à base de paquets de protocole Internet (IP) (205), sans nécessiter d'échange de clés univoque, le procédé consistant à :
fournir une pluralité de paquets;
sécuriser ladite pluralité de paquets selon des informations de sécurité, en vue de former des paquets sécurisés, les informations de sécurité étant modifiées selon une période de validité de clé, les informations de sécurité incluant des informations de mots de commande permettant la génération de clés au niveau de chacun des dispositifs d'utilisateur final (210) ;
multidiffuser un message de commande d'habilitation vers les dispositifs d'utilisateur final (210) à travers le réseau à base de paquets IP (205), le message de commande d'habilitation incluant les informations de mots de commande, le message de commande d'habilitation incluant des premières informations d'adresse;
multidiffuser les paquets sécurisés vers les dispositifs d'utilisateur final (210) à travers le réseau à base de paquets IP (205), les paquets sécurisés incluant des secondes informations d'adresse ;
créer une annonce selon un protocole d'annonce, l'annonce incluant les secondes informations d'adresse des paquets sécurisés et les premières informations d'adresse du message de commande d'habilitation ;
transmettre l'annonce aux dispositifs d'utilisateur final (210), ce qui permet par conséquent une mise en correspondance entre les paquets sécurisés et le message de commande d'habilitation dans les dispositifs d'utilisateur final (210).

2. Procédé selon la revendication 1, dans lequel ladite pluralité de paquets contient des données de radiodiffusion provenant d'un événement de radiodiffusion.

3. Procédé selon la revendication 1, dans lequel un message de commande d'habilitation (EMM) est également transmis auxdits dispositifs d'utilisateur final (210), de sorte que des informations de message EMM incluses dans ledit message EMM sont requises en vue de permettre audit dispositif d'utilisateur final (210) d'accéder audit message ECM.

4. Procédé selon la revendication 3, dans lequel ledit message EMM est transmis auxdits dispositifs d'utilisateur final (210) par le biais d'un message hors bande, de sorte que ledit message EMM n'est pas transmis avec lesdits paquets sécurisés.

5. Procédé selon la revendication 4, dans lequel ledit message hors bande est un message de courrier électronique.

6. Procédé selon l'une quelconque des revendications 3 à 5, dans lequel le réseau à base de paquets (205) est un réseau IP (205) et ledit message ECM est transmis à travers ledit réseau IP (205) selon au moins un élément parmi une adresse IP de multidiffusion et un port IP, de sorte que ledit dispositif d'utilisateur final (210) est informé dudit au moins un élément parmi ladite adresse IP de multidiffusion et ledit port IP par le biais d'un protocole de notification IP.

7. Procédé selon l'une quelconque des revendications 3 à 6, dans lequel ledit dispositif d'utilisateur final (210) filtre au moins l'un parmi ledit message ECM et ledit message EMM selon au moins une caractéristique sélectionnée dans le groupe constitué d'une caractéristique dudit dispositif d'utilisateur final (210) et d'une caractéristique d'informations stockées par ledit dispositif d'utilisateur final (210).

8. Procédé selon la revendication 7, dans lequel ledit dispositif d'utilisateur final (210) filtre ledit message ECM selon des informations de message EMM, de sorte que seul un message ECM pour lequel des informations de message EMM ont été reçues est accessible par ledit dispositif d'utilisateur final (210).

9. Procédé selon la revendication 8, dans lequel ledit message ECM est inclus dans un paquet, et une adresse IP dudit paquet est annoncée audit dispositif d'utilisateur final (210), de sorte que ledit dispositif d'utilisateur final (210) filtre ledit message ECM en écoutant ladite adresse IP afin de recevoir ledit paquet lorsque ledit dispositif d'utilisateur final (210) a reçu lesdites informations de message EMM.

10. Procédé selon la revendication 7, dans lequel ledit dispositif d'utilisateur final (210) filtre au moins l'un parmi ledit message ECM et ledit message EMM selon que ledit au moins un message parmi ledit message ECM et ledit message EMM est désigné comme un message unique, un message de groupe ou un message générique.

11. Procédé selon l'une quelconque des revendications 3 à 10, dans lequel lesdites informations de message EMM comportent un identifiant de service, et dans lequel ledit identifiant de service est connexe à un type de contenu desdits paquets sécurisés.

12. Procédé selon la revendication 11, dans lequel lesdits paquets sécurisés contiennent une pluralité de types de contenu différents, chaque type de contenu présentant un identifiant de service individuel, de sorte qu'un accès différencié auxdits types de contenu différents par ledit dispositif d'utilisateur final (210) est délivré en fonction desdits identifiants de service.

13. Procédé selon la revendication 11 ou 12, dans lequel ledit identifiant de service correspond à une pluralité de messages ECM.

14. Procédé selon l'une quelconque des revendications 3 à 13, dans lequel lesdites informations de message EMM incluent un identifiant permettant de déterminer un accès auxdits paquets sécurisés selon au moins une caractéristique sélectionnée dans le groupe constitué d'une caractéristique d'un dispositif d'utilisateur final (210) et d'une caractéristique d'informations stockées sur ledit dispositif d'utilisateur final (210).

15. Procédé selon la revendication 14, dans lequel ledit identifiant est un identifiant d'interdiction destiné à identifier un dispositif d'utilisateur final dont l'accès à un contenu dudit message ECM est bloqué.

16. Procédé selon la revendication 15, dans lequel ledit identifiant d'interdiction correspond à au moins une caractéristique stockée dans ledit dispositif d'utilisateur final.

17. Procédé selon la revendication 16, dans lequel ladite au moins une caractéristique inclut un emplacement géographique dudit dispositif d'utilisateur final (210).

18. Procédé selon l'une quelconque des revendications 3 à 17, dans lequel ledit message ECM permet un accès différencié auxdits paquets sécurisés par ledit dispositif d'utilisateur final (210) selon une pluralité d'identifiants transmis dans ledit message EMM.

19. Procédé selon l'une quelconque des revendications 3 à 18, dans lequel ledit dispositif d'utilisateur final (210) stocke au moins un contenu d'au moins l'un parmi ledit message ECM et ledit message EMM.

20. Procédé selon la revendication 19, dans lequel ledit message ECM présente une période de validité de clé limitée, de sorte qu'un nouveau message ECM est périodiquement reçu en vue d'accéder à ladite pluralité de paquets.

21. Procédé selon la revendication 20, dans lequel une durée de ladite période de validité de clé est au moins partiellement déterminée par une durée d'une session destinée à recevoir lesdits paquets sécurisés par le biais dudit dispositif d'utilisateur final (210).

22. Procédé selon la revendication 21, dans lequel ladite durée de ladite période de validité de clé est inférieure à ladite durée de ladite session, de sorte qu'au moins l'un parmi un nouveau message ECM et un nouveau message EMM doit être reçu à plusieurs reprises au cours de ladite session.

23. Procédé selon la revendication 22, dans lequel ledit message EMM présente une durée d'autorisation limitée, de sorte qu'un nouveau message EMM est périodiquement reçu en vue d'accéder à ladite pluralité de paquets.

24. Procédé selon l'une quelconque des revendications 3 à 23, dans lequel au moins une partie desdits paquets sécurisés est accessible uniquement avec ledit message ECM, sans ledit message EMM, sous la forme d'une prévisualisation desdits paquets sécurisés.

25. Procédé selon l'une quelconque des revendications 3 à 24, dans lequel lesdites informations de sécurité sont transmises selon un protocole IP standard.

26. Procédé selon la revendication 25, dans lequel lesdits paquets sont transmis dans le cadre d'une session de multidiffusion, et dans lequel une annonce de ladite session est transmise selon un protocole d'annonce standard.

27. Procédé selon la revendication 25 ou 26, dans lequel ledit protocole IP standard est le protocole IPSEC.

28. Procédé selon la revendication 27, dans lequel ladite annonce inclut des informations permettant d'associer chaque message ECM à un identifiant de service inclus dans un message EMM.

29. Procédé selon la revendication 28, dans lequel ledit protocole d'annonce est le protocole de description de session (SDP).

30. Procédé selon la revendication 28 ou 29, dans lequel ledit message ECM est associé à au moins une partie d'une session de multidiffusion avec ledit dispositif d'utilisateur final (210), et dans lequel ladite association est transmise dans lesdits paquets sécurisés sous la forme d'un paramètre d'attribut.

31. Procédé selon la revendication 30, dans lequel ledit message ECM est synchronisé avec lesdits paquets sécurisés au moyen d'une valeur d'indice de paramètres de sécurité (SPI) desdits paquets sécurisés.

32. Procédé selon la revendication 31, dans lequel une nouvelle période de validité de clé est indiquée par une modification dans ladite valeur d'indice SPI, de sorte qu'un nouveau message ECM est requis en vue d'accéder auxdits paquets sécurisés.

33. Procédé selon l'une quelconque des revendications 26 à 32, dans lequel les paquets d'annonce sont chiffrés.

34. Procédé selon l'une quelconque des revendications 14 à 33, dans lequel ledit dispositif d'utilisateur final (210) est bloqué en ce qui concerne tout accès ultérieur auxdits paquets sécurisés par le biais d'une révocation avec au moins l'un d'un message EMM et d'un message ECM.

35. Procédé selon la revendication 34, dans lequel ladite révocation est destinée à un dispositif d'utilisateur final spécifique.

36. Procédé selon la revendication 35, dans lequel ladite révocation est destinée à une pluralité de dispositifs d'utilisateur final (210).

37. Procédé selon l'une quelconque des revendications 34 à 36, dans lequel ladite révocation amène un nouvel identifiant de service à être requis en vue d'accéder à un contenu d'un message ECM correspondant auxdits paquets sécurisés.

38. Procédé selon l'une quelconque des revendications 3 à 37, dans lequel lesdits dispositifs d'utilisateur final (210) reçoivent au moins lesdits paquets sécurisés à partir d'au moins un dispositif d'utilisateur final homologue (210).

39. Procédé selon la revendication 38, dans lequel ledit au moins un dispositif d'utilisateur final homologue (210) génère au moins l'un parmi ledit message EMM et ledit message ECM.

40. Procédé selon la revendication 39, dans lequel ledit au moins un dispositif d'utilisateur final homologue (210) inclut un serveur sécurisé destiné à générer ledit au moins un message parmi ledit message EMM et ledit message ECM.

41. Procédé selon la revendication 39 ou 40, dans lequel ledit message EMM généré par ledit au moins un dispositif d'utilisateur final homologue (210) est authentifié par une entité d'autorisation centralisée.

42. Procédé selon les revendications 39 à 41, dans lequel ledit message EMM généré par ledit au moins un dispositif d'utilisateur final homologue (210) est mis en correspondance avec un nouveau message ECM permettant d'accéder auxdits paquets sécurisés, par une entité d'autorisation centralisée.

43. Procédé selon l'une quelconque des revendications 39 à 42, dans lequel lesdits paquets sont transmis dans le cadre d'une session de multidiffusion, une annonce de ladite session est transmise selon un protocole d'annonce standard, et ladite annonce inclut au moins un indice de paramètres de sécurité (SPI) pour associer chaque message ECM à un identifiant de service inclus dans un message EMM, de sorte que ledit au moins un dispositif d'utilisateur final homologue (210) génère au moins un élément parmi ladite annonce et ledit indice SPI.

44. Procédé selon l'une quelconque des revendications 32 à 43, dans lequel ladite entité d'autorisation centralisée commande au moins l'un des éléments parmi ledit message ECM, ledit message EMM, ladite annonce et ledit indice SPI.

45. Procédé selon l'une quelconque des revendications 32 à 44, dans lequel au moins l'un parmi ledit message EMM et ledit message ECM est généré par ladite entité d'autorisation centralisée.

46. Procédé selon l'une quelconque des revendications 32 à 45, dans lequel lesdits dispositifs d'utilisateur final (210) sont situés dans une grappe, et dans lequel chaque grappe est coordonnée par ladite entité d'autorisation centralisée.

47. Procédé selon la revendication 46, dans lequel ladite grappe est validée en continu par ladite entité d'autorisation centralisée.

48. Procédé selon l'une quelconque des revendications 3 à 47, dans lequel un message ECM de paiement à la carte contient des informations d'achat permettant d'acheter un accès auxdits paquets sécurisés, et dans lequel les informations de message EMM ne sont pas nécessaires pour accéder audit message ECM de paiement à la carte.

49. Procédé selon l'une quelconque des revendications 3 à 47, dans lequel un message EMM contient un crédit pour l'achat d'un accès auxdits paquets sécurisés pour un contenu de paiement à la carte.

50. Mécanisme de transmission de contenu multimédia numérique sécurisé comprenant des moyens aptes à mettre en oeuvre les étapes selon l'une quelconque des revendications 1 à 49.

51. Procédé selon la revendication 1, consistant en outre à :
fournir un système d'accès conditionnel, CA, de radiodiffusion comprenant au moins une caractéristique de sécurité d'accès CA; et
dans lequel le réseau à base de paquets (205) inclut un système de transmission de données à commutation de paquets incluant un sous-système de sécurité présentant une pluralité de caractéristiques de sécurité de commutation de paquets; et
la sécurisation de ladite pluralité de paquets consiste à :
créer une mise en correspondance entre au moins un élément de sécurité d'accès CA et au moins l'un de la pluralité d'éléments de sécurité de commutation de paquets, ce qui permet de produire par conséquent un système d'accès CA par paquets; et
sécuriser ladite pluralité de paquets selon le système d'accès CA par paquets.

52. Procédé selon la revendication 51, dans lequel le système de transmission de données à commutation de paquets comprend un système IP.

53. Procédé selon la revendication 52, dans lequel le système IP comprend un sous-système IPSEC ; et
le sous-système IPSEC comprend la pluralité d'éléments de sécurité de commutation de paquets.

54. Procédé selon l'une quelconque des revendications 51 à 53, dans lequel le système d'accès CA de radiodiffusion comprend un système d'accès CA basé sur les messages EMM/ECM.

55. Système de transmission de contenu multimédia numérique sécurisé destiné à être utilisé dans un environnement à commutation de paquets (système d'accès CA par paquets) comprenant des moyens aptes à mettre en oeuvre les étapes selon l'une quelconque des revendications 51 à 54.
